(19) Europäisches Patentamt
European Patent Office
Office européen des brevets

(11) **EP 4 405 415 B1**

(12) **FASCICULE DE BREVET EUROPEEN**

(45) Date de publication et mention de la délivrance du brevet:
**29.10.2025 Bulletin 2025/44**

(21) Numéro de dépôt: **22789272.6**

(22) Date de dépôt: **20.09.2022**

(51) Classification Internationale des Brevets (IPC):
***C08J 3/20*** *(2006.01)* ***B60C 1/00*** *(2006.01)*
***C08K 3/013*** *(2018.01)* ***C08K 3/36*** *(2006.01)*
***C08L 31/04*** *(2006.01)* ***C08K 5/5425*** *(2006.01)*

(52) Classification Coopérative des Brevets (CPC):
(C-Sets disponibles)
**C08J 3/20; B60C 1/0016; C08K 3/36;**
**C08K 5/5425;** C08J 2323/08; C08J 2331/04
(Cont.)

(86) Numéro de dépôt international:
**PCT/FR2022/051766**

(87) Numéro de publication internationale:
**WO 2023/041889 (23.03.2023 Gazette 2023/12)**

(54) **PROCÉDÉ D'OBTENTION PAR EXTRUSION D'UNE COMPOSITION ÉLASTOMÉRIQUE RENFORCÉE**

VERFAHREN ZUR HERSTELLUNG EINER VERSTÄRKTEN ELASTOMERZUSAMMENSETZUNG DURCH EXTRUSION

METHOD FOR OBTAINING A REINFORCED ELASTOMERIC COMPOSITION BY EXTRUSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2021 FR 2109839**

(43) Date de publication de la demande:
**31.07.2024 Bulletin 2024/31**

(73) Titulaire: **COMPAGNIE GENERALE DES ETABLISSEMENTS MICHELIN**
**63000 Clermont-Ferrand (FR)**

(72) Inventeurs:
- **MIOCHE, Gilles**
  **63040 Clermont-Ferrand Cedex 9 (FR)**
- **PRAS, Maxime**
  **63040 Clermont-Ferrand Cedex 9 (FR)**
- **SCHNELL, Benoît**
  **2540 Grenchen (CH)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2009/048472 WO-A1-2020/025400**

- **THAM DO Q: "Preparation and Properties of Ethylene Vinyl Acetate Copolymer/Silica Nanocomposites in Presence of EVA-g-Acrylic Acid", 15 April 2015 (2015-04-15), pages 2777 - 2784, XP055921935, Retrieved from the Internet <URL:http://www.ncbi.nlm.nih.gov/pubmed/26353492> [retrieved on 20220517], DOI: 10.1166/jnn.2015.9209**
- **WADDELL WALTER: "Analysing macro-dispersion of silica in tire tread compound", 6 September 2021 (2021-09-06), pages 18 - 21, XP055921866, Retrieved from the Internet <URL:https://s3-prod.rubbernews.com/2021-09/RPN_20210906_tech_notebook.pdf> [retrieved on 20220517]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

(52) Classification Coopérative des Brevets (CPC):
(Cont.)

C-Sets
**C08K 3/36, C08L 23/0853;**
**C08K 5/5425, C08L 23/0853**

## Description

La présente invention se rapporte à un procédé de préparation de compositions élastomériques à base de copolymère EVA comprenant une étape d'incorporation par extrusion d'une charge renforçante comprenant une charge inorganique renforçante, compositions notamment destinées à la fabrication de pneumatiques ou de produits semi-finis pour pneumatiques.

Les compositions de caoutchouc utilisées dans la fabrication de pneumatiques comprennent habituellement des caoutchoucs naturels ou synthétiques qui sont des élastomères diéniques comportant des doubles liaisons carbone-carbone, également appelées insaturations, dans leur chaîne principale. La présence de ces doubles liaisons rend ces élastomères sensibles notamment à la thermo-oxydation, tel que par exemple des échauffements qui surviennent lors de l'utilisation du pneumatique. Ces échauffements peuvent conduire à des modifications des propriétés des compositions de caoutchouc et notamment à changer les propriétés mécaniques de ces compositions et le comportement des articles semi-finis les contenant.

La demanderesse décrit, dans sa demande de brevet WO2018115758, une combinaison spécifique d'un copolymère à base d'au moins un monomère éthylène et d'au moins un monomère d'acétate de vinyle (copolymère EVA) et d'un agent de couplage organosilane spécifique, en présence de charges renforçantes inorganiques comprenant de la silice, permettant d'obtenir des compositions présentant une rigidité qui évolue peu en fonction de la température tout en conservant une résistance aux grandes déformations et un bon renforcement.

De manière générale les compositions de caoutchoucs pour pneumatiques à base d'élastomères diéniques, de charges renforçantes comprenant au moins une charge renforçante inorganique notamment de type silice, et d'agents de couplage de la charge renforçante inorganique avec l'élastomère diénique, sont préparées dans un mélangeur interne, ce qui permet d'assurer une bonne dispersion de la charge renforçante inorganique, puis sont transférées dans un mélangeur externe où est ajouté l'agent de réticulation (ou de vulcanisation).

Il a été constaté que ce procédé de préparation, lorsqu'il est mis en œuvre pour la fabrication des compositions élastomériques à base d'élastomère EVA telles que décrites dans la demande WO2018115758, s'accompagne de pertes de matières importantes, en particulier dans le mélangeur interne.

D'un point de vue industriel, il existe un besoin de développer un procédé d'obtention de compositions élastomériques, notamment pour pneumatiques, à base de copolymère éthylène/acétate de vinyle, d'un agent de couplage organosilane, d'une charge renforçante comprenant une charge inorganique renforçante, par exemple de la silice, et d'un système de réticulation aux peroxydes (selon la demande WO2018115758) permettant de limiter les pertes de matières, tout en assurant une bonne dispersion de la charge renforçante, notamment de la charge renforçante inorganique, afin d'obtenir après cuisson des propriétés mécaniques au moins équivalentes à celles des compositions réticulées obtenues selon le procédé habituel mettant en œuvre un mélangeur interne et un mélangeur externe. L'article de Tham Do Q : "Preparation and Properties of Ethylene Vinyl Acetate Copolymer/Silica Nanocomposites in Presence of EV A-g-Acrylic Acid, J. Nanosci. Nanotechnol. 15, 2777-2784, 2015" est cité.

La demanderesse a ainsi développé un procédé d'extrusion de compositions élastomériques à base d'au moins un copolymère éthylène/acétate de vinyle, d'au **moins** une charge renforçante comprenant au moins une charge renforçante inorganique et d'au moins un agent de couplage de ladite charge inorganique et dudit copolymère mettant en œuvre une extrudeuse à double vis, encore dénommée extrudeuse bi-vis, avec une énergie mécanique spécifique (ou EMS) transmise aux-dites compositions élastomériques au cours du procédé supérieure ou égale à 1000 J/g.

En outre, ce procédé d'extrusion mis en œuvre présente les avantages suivants :

- l'incorporation dans l'extrudeuse de tous les composants, notamment y compris le système de réticulation aux peroxydes, peut être envisagée alors que le procédé classique utilise deux mélangeurs différents (un mélangeur externe étant utilisé pour l'incorporation du système de réticulation) ;
- le procédé d'extrusion en continu permet de réduire le temps de mélangeage et donc d'augmenter le débit des compositions fabriquées ;
- une filière de mise en forme en sortie d'extrudeuse permet d'obtenir un article semi-fini cru directement assemblable sur le tambour de confection d'un pneumatique en cours de fabrication, notamment directement assemblable sur la carcasse d'un pneumatique en cours de fabrication.

Ainsi l'invention a pour objet un procédé d'obtention d'une composition élastomérique à base d'au moins :

- un copolymère A à base d'au moins un monomère d'éthylène et d'au moins un monomère d'acétate de vinyle ; et
- une charge renforçante comprenant au moins une charge renforçante inorganique,

le procédé comprenant les étapes suivantes :

a) introduire dans une extrudeuse à double vis, de préférence co-rotative, au moins :

- ledit copolymère A à base d'au moins un monomère d'éthylène et d'au moins un monomère d'acétate de vinyle ;
- ladite charge renforçante comprenant au moins une charge renforçante inorganique ;
- à titre d'agent de couplage entre ledit copolymère A et ladite charge renforçante inorganique au moins un composé organosilane de formule (I) :

$$B\text{-}Z\text{-}Si(G^1)_{(3\text{-}d)}(G^2)_{(d)} \qquad (I)$$

dans laquelle :

- B représente un groupe fonctionnel interagissant avec le copolymère A, le groupe B étant choisi parmi les groupes vinyliques, les atomes d'halogène, les groupes $\alpha,\beta$ énones insaturées, les groupes acryloxy, les groupes méthacryloxy, les groupes acrylamido, les groupes méthacrylamido et les groupes amino ;
- Z représente un groupe espaceur formé d'une chaîne hydrocarbonée divalente comportant de 1 à 18 atomes de carbone et permettant de relier le groupe B à l'atome de silicium ;
- $G^1$ identiques ou différents, représentent chacun un groupe hydrocarboné monovalent choisi parmi les alkyles, linéaires ou ramifiés, ayant de 1 à 18 atomes de carbone, les cycloalkyles ou les aryles, substitués ou non substitués, ayant de 5 à 18 atomes de carbone, alkenyloxyles, substitués ou non substitués, ayant de 2 à 18 atomes de carbone, les groupes aryloxy ou aralkyloxy, substitués ou non substitués, ayant de 6 à 18 atomes de carbone ou un groupe monovalent se présentant sous la forme $R^1\text{-}(\text{-}O\text{-}(CJ_2)_a)_b\text{-}O\text{-}$ dans laquelle J représente un hydrogène, un groupe phényle ou un groupe alkyle ayant de 1 à 4 atomes de carbone, b est un nombre entier appartenant à l'intervalle 1 à 18 et a est un nombre entier appartenant à l'intervalle 1 à 6, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone ;
- $G^2$ identiques ou différents, représentent chacun un groupe monovalent choisi parmi le groupe hydroxyle (-OH), les alcoxyles, linéaires ou ramifiés, substitués ou non substitués, ayant de 1 à 18 atomes de carbone ;
- d est égal à 1, 2 ou 3 ; et

b) récupérer en sortie d'extrudeuse la composition extrudée, la dispersion de la charge renforçante dans la composition extrudée présentant une note Z supérieure ou égale à 80, préférentiellement supérieure ou égale à 85 et de façon particulièrement préférée supérieure ou égale à 90 ;
et tel que :

- l'extrudeuse comprend plusieurs zones disposées axialement depuis une extrémité amont jusqu'à une extrémité aval de l'extrudeuse dont au moins :

  o une zone d'introduction (X) où peuvent être introduits les composants de ladite composition élastomérique ;
  o une zone de cisaillement (Y) permettant la fusion du copolymère A etla dispersion de la charge renforçante dans le copolymère A fondu ;

- la température de paroi de l'extrudeuse est maintenue dans un domaine allant de 50°C à 100°C, préférentiellement de 55°C à 85°C, pendant tout le procédé d'extrusion ;
- la vitesse de rotation de la double vis est comprise dans un domaine allant de 150 rpm à 275 rpm, préférentiellement de 200 rpm à 250 rpm pendant tout le procédé d'extrusion ;
- l'énergie mécanique spécifique transmise à la composition au cours du procédé est comprise dans un domaine allant de 1000 J/g à 14400 J/g, plus préférentiellement de 1200 J/g à 7000 J/g, plus préférentiellement encore de 1500 J/g à 5000 J/g.

Préférentiellement, chacune des vis de la double vis comprend au niveau de la zone de cisaillement Y un ou plusieurs éléments choisis parmi un élément malaxeur inverse, un élément à pas inverse à filet simple ou un élément à pas inverse à double filet, et leurs combinaisons.

Préférentiellement, les zones de l'extrudeuse disposées axialement depuis une extrémité amont jusqu'à une extrémité aval de l'extrudeuse comprennent successivement :

- une zone d'introduction (X1) du copolymère A ;
- une zone de cisaillement (Y1) de sorte que le copolymère A y est amené dans un état fondu ;

- une zone d'introduction (X2) de la charge renforçante et de l'agent de couplage ;
- une zone de cisaillement (Y2) de sorte que la charge renforçante y est dispersée dans le copolymère A fondu.

Préférentiellement, les zones de l'extrudeuse disposées axialement depuis une extrémité amont jusqu'à une extrémité aval de l'extrudeuse comprennent successivement :

- une zone d'introduction (X1) du copolymère A, de la charge renforçante et de l'agent de couplage ;
- une zone de cisaillement (Y1) de sorte que le copolymère A y est amené dans un état fondu ;
- une zone de cisaillement (Y2) de sorte que la charge renforçante y est dispersée dans le copolymère A fondu.

Préférentiellement, le procédé comprend en outre l'incorporation et l'homogénéisation d'au moins un système de réticulation aux peroxydes dans la composition comprenant le copolymère A, la charge renforçante et l'agent de couplage.

Préférentiellement, le système de réticulation aux péroxydes est incorporé dans la composition extrudée comprenant le copolymère A, la charge renforçante et l'agent de couplage à l'issue de l'étape b) dans un mélangeur externe.

Préférentiellement, le système de réticulation est ajouté dans l'extrudeuse, avant l'étape b), dans une zone d'introduction (X3) située en aval d'une zone de cisaillement (Y2), la zone (Y2) étant une zone de cisaillement permettant la dispersion de la charge renforçante dans le copolymère A fondu.

Préférentiellement, l'extrudeuse comprend une zone de mélangeage (Z1) située en aval de la zone (X3) de sorte que le système de réticulation aux peroxydes y est homogénéisé dans la composition du copolymère A, de la charge renforçante et de l'agent de couplage.

Préférentiellement, le procédé comprend en outre une filière de sortie de l'extrudeuse permettant d'obtenir une composition élastomérique directement assemblable sur le tambour de confection d'un pneumatique, notamment directement assemblable sur la carcasse d'un pneumatique.

Préférentiellement, le taux de charge renforçante dans la composition élastomérique est compris dans un domaine allant de 20 à 100 pce, plus préférentiellement de 30 à 80 pce. Préférentiellement, la charge renforçante comprend majoritairement une charge inorganique renforçante, plus préférentiellement encore comprend majoritairement une silice, notamment de précipitation.

Préférentiellement, le taux molaire de monomère d'éthylène dans le copolymère A est supérieur ou égal à 51%, de préférence supérieur ou égal à 55%, de préférence va de 57% à 90%.

Préférentiellement, la composition telle que définie ci-dessus et ci-dessous comprend un mélange de copolymères A différents les uns des autres.

Préférentiellement, le taux de copolymère A ou du mélange de copolymères A est d'au moins 50 pce.

Préférentiellement, le taux du composé organosilane de formule (I) va de 0,2 à 12 pce. Préférentiellement, le taux du composé organosilane de formule (I) va de 1% à 15% en poids par rapport au poids de la charge renforçante inorganique.

L'invention a également pour objet un article semi-fini pour pneumatique comprenant au moins une composition élastomérique obtenue selon le procédé tel que défini ci-dessus et ci-dessous.

L'invention a également pour objet un pneumatique comprenant au moins une composition élastomérique obtenue selon le procédé ou au moins un article semi-fini pour pneumatique tel que défini ci-dessus et ci-dessous.

## I. Mesures et tests

I-1) Mesure de la note Z

D'une manière connue, la dispersion de charges renforçantes dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005.

L'échantillon contenant un système de réticulation aux peroxydes classique est mis en forme sous forme d'un pavé droit de dimensions largeur 40 mm, longueur 100 mm et épaisseur 13 mm, puis est cuit pendant 20 min à 170°C. L'échantillon réticulé est refroidi à température ambiante (23°C) puis est coupé via un dispositif de coupe comportant un mécanisme faisant levier pour permettre de faire une coupe verticale et comportant une fixation pour une lame de rasoir. La lame de rasoir est à un seul tranchant et est monté sur le dispositif de coupe. La lame est à une température de 23°C. Grâce à ce dispositif de coupe, une éprouvette ayant une section transversale de 5 mm* 8 mm est obtenue puis est placée, sans toucher la surface qui sera utilisée pour la mesure, dans l'appareil « disperGRADER+ » pour la mesure de la note Z telle que décrite ci-dessous.

Le calcul de la note Z est basé sur le pourcentage de surface dans laquelle la charge renforçante n'est pas

dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z= 100 - (\% \text{ surface non dispersée}) /0.35$$

Le pourcentage de surface non dispersée est, quant à lui, mesuré grâce à une caméra observant la surface de l'échantillon sous une lumière incidente à 30°. Les points clairs sont associés à de la charge renforçantes et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus la note Z est haute, meilleure est la dispersion de la charge renforçante dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge renforçante dans la matrice élastomérique.

I-2) Propriétés mécaniques

<u>I-2-1) Mesure de l'énergie de rupture-déchirabilité</u>

Les indices de déchirabilité sont mesurés à 100°C. On détermine notamment la force à exercer pour obtenir la rupture (FRD, en N/mm) et on mesure la déformation à rupture (DRD, en %) sur une éprouvette de dimensions 10 x 85 x 2,5 mm entaillée au centre de sa longueur par 3 entailles sur une profondeur de 5 mm, pour provoquer la rupture de l'éprouvette. Ainsi on peut déterminer l'énergie pour provoquer la rupture (Energie de rupture) de l'éprouvette qui est le produit du FRD et DRD.

<u>I-2-2) Mesure des propriétés dynamiques après cuisson</u>

Les essais de traction permettent de déterminer les contraintes d'élasticité et les propriétés à la rupture. Sauf indication contraire, ils sont effectués conformément à la norme française NF T 46-002 de septembre 1988. On mesure en première élongation (i.e., après un cycle d'accommodation au taux d'extension prévu pour la mesure elle-même) le module sécant nominal (ou contrainte apparente, en MPa) à 50% d'allongement (noté MA50).

Les essais d'allongement rupture (AR) et de contrainte rupture (CR) sont basés sur la norme NF ISO 37 de Décembre 2005 sur une éprouvette haltère de type H2 et sont mesurés à une vitesse de traction de 500 mm/min. L'allongement rupture est exprimé en pourcentage d'allongement. La contrainte rupture est exprimée en MPa.

Toutes les mesures de traction sont effectuées dans les conditions normales de température (23±2°C) et d'hygrométrie (50±5% d'humidité relative), selon la norme française NF T 40-101 (décembre 1979).

<u>I-2-3) Mesure de l'énergie mécanique spécifique du procédé d'extrusion</u>

Comme décrit dans l'article de Domenech (Composites Science and Technology 75 (2013) 7-14), l'énergie mécanique spécifique (EMS ou SME pour specific mechanical energy) traduit le niveau d'énergie par unité de masse de matériau transmis audit matériau par effet mécanique pendant le procédé d'extrusion. Elle est exprimée en J/g. Les paramètres opératoires lors de l'opération d'extrusion sont la vitesse de rotation des vis (N), le débit d'alimentation (Q) et la température du fourreau (Tb). La mesure du couple moteur ($\tau$) est enregistrée pendant les essais d'extrusion, permettant le calcul de l'énergie mécanique spécifique (EMS) selon la formule (1) :

$$SME = A * ( \tau * N ) / Q \qquad (1)$$

dans laquelle :

- A est un paramètre caractéristique de l'extrudeuse utilisée pour le procédé d'extrusion calculé selon la formule (2) :

$$A = P_{moteur} / (\tau_{max} * N_{max}) \qquad (2)$$

  dans laquelle $P_{moteur}$ est la puissance du moteur, $\tau_{max}$ est le couple moteur maximum et $N_{max}$ est la vitesse maximum de rotation des vis ;

- $\tau$ est le couple moteur ;
- N est la vitesse de rotation des vis ;
- et Q est le débit d'alimentation en composition à extruder.

## II. Description détaillée

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b). Dans la présente, lorsqu'on désigne un intervalle de valeurs par l'expression « de a à b », on désigne également et préférentiellement l'intervalle représenté par l'expression « entre a et b ».

L'abréviation « pce » (usuellement « phr » en anglais pour « per hundred part of rubber ») signifie parties en poids pour cent parties en poids d'élastomère qu'il soit thermoplastique ou non (ou du total des élastomères si plusieurs élastomères sont présents) ou caoutchouc présent dans la composition de caoutchouc. L'utilisation de cette unité est conventionnelle dans le domaine des compositions de caoutchouc. Lorsque la composition comprend, par exemple, un couplage de copolymère A et d'élastomère(s), la somme des taux massiques du copolymère A et du ou des élastomère(s) est égale à 100 pce et le taux massique des autres constituants de la composition est exprimé en pce par rapport aux 100 pce du copolymère A et du ou des élastomère(s).

Par « composition élastomérique à base de », il faut entendre une composition de caoutchouc comportant le mélange et/ou le produit de réaction *in situ* des différents constituants utilisés, certains de ces constituants de base étant susceptibles de, ou destinés à réagir entre eux, au moins en partie, lors des différentes phases de fabrication de la composition, la composition pouvant ainsi être à l'état totalement ou partiellement réticulé ou à l'état non-réticulé.

De façon usuelle dans la présente demande, on utilise indifféremment dans la présente description les termes « élastomère » et « caoutchouc ». Ces termes sont interchangeables.

Par « polymère », on entend une macromolécule linéaire ou ramifiée ayant une séquence constituée de plusieurs unités répétitives (ou motif monomère), ces unités répétitives pouvant avoir la même structure chimique ou une structure chimique différente (on parlera alors éventuellement de copolymère ou de terpolymère).

Par « copolymère à base d'au moins un monomère d'éthylène et d'au moins un monomère d'acétate de vinyle», on entend un polymère à base d'au moins un ou plusieurs monomères d'éthylène et d'au moins un ou plusieurs monomères d'acétate de vinyle. Ce type de copolymère est bien connu de l'homme du métier sous le nom de copolymère EVA. Ce copolymère peut donc résulter de la polymérisation de monomères éthylène (monomères E) et de monomères d'acétate de vinyle (monomères VA). Il est entendu que d'autres monomères différents des monomères d'éthylène et d'acétate de vinyle peuvent être optionnellement présents dans le copolymère. Ce ou ces monomères différents (monomères X) présentent des fonctions polymérisables de réactivité identique ou sensiblement identique avec les monomères E et les monomères VA et peuvent être distribués statistiquement le long de la chaîne du copolymère. Le copolymère EVA utilisable dans le cadre de la présente invention présente des propriétés élastiques, c'est donc un élastomère. Dans la suite de la description, on mentionnera indifféremment copolymère EVA ou élastomère EVA. Par ailleurs, on ne doit pas confondre le copolymère EVA utilisé dans les compositions élastomères de l'invention avec un copolymère EVA de faible masse molaire généralement utilisé à titre de résine, qui n'est pas un élastomère compte tenu de sa faible masse molaire.

La composition élastomérique mise en œuvre selon le procédé de l'invention comporte au moins une charge renforçante, ladite charge renforçante comprenant au moins une charge inorganique renforçante. Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface, nécessitant pour être utilisée à titre de charge renforçante l'emploi d'un agent ou système de couplage destiné à assurer une liaison chimique stable entre la charge et la matrice élastomérique.

Par « agent de couplage » de la charge renforçante inorganique au copolymère A, on entend dans le cadre de la présente description, un agent apte à établir une connexion suffisante, de nature chimique et/ou physique, entre la charge inorganique renforçante et le copolymère A.

Par « système de réticulation aux peroxydes », on entend l'utilisation d'un ou de plusieurs peroxydes destinés à réticuler un polymère, notamment un copolymère et/ou un élastomère. Le ou les peroxydes forme(nt) lors de son (leur) activation des radicaux libres sur le copolymère, notamment sur le ou les élastomères, ce qui permet la réticulation des

chaînes du copolymère (de l'élastomère) sans que le(s) peroxyde(s) s'intègre(nt) dans ces chaînes. Les peroxydes sont bien connus de l'homme du métier. Toutes les valeurs de température de transition vitreuse « Tg » sont mesurées de manière connue par DSC (Differential Scanning Calorimetry) selon la norme ASTM D3418 de 1999 sauf mention expresse différente.

On peut par exemple mesurer la quantité (en masse ou en mol) de chaque monomère à l'intérieur du polymère c'est-à-dire du copolymère A et du polymère C en utilisant les techniques connues de spectroscopie infrarouge à transformée de Fourrier et la norme ISO8985 de 1998.

Selon l'invention, les produits carbonés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les composés (tels que les monomères, les polymères), les réactifs et autres composants mentionnés dans la description, telles que les charges, etc.

Pour obtenir les propriétés de renforcement optimales conférées par une charge renforçante notamment dans une bande de roulement de pneumatique et ainsi une haute résistance à l'usure, on sait qu'il convient d'une manière générale que cette charge renforçante soit présente dans la matrice élastomérique sous une forme finale qui soit à la fois la plus finement divisée possible et répartie de la façon la plus homogène possible. Or, de telles conditions ne peuvent être réalisées que dans la mesure où cette charge renforçante présente une très bonne aptitude, d'une part à s'incorporer dans la matrice lors du mélange avec l'élastomère et à se désagglomérer, d'autre part à se disperser de façon homogène dans cette matrice.

Les silices à haute surface spécifique se sont imposées comme des charges de choix dans la mesure où elles offrent la possibilité d'augmenter le nombre de liaisons de la silice avec l'élastomère et donc d'augmenter le niveau de renforcement de celui-ci. C'est pourquoi il apparaît avantageux d'utiliser dans des compositions de caoutchouc notamment pour bandes de roulement de pneumatiques, des silices à haute surface spécifique, éventuellement supérieure à celle classiquement utilisée, de l'ordre de 160 $m^2/g$, pour notamment améliorer la résistance à l'usure de ces bandes de roulement. Néanmoins, la dispersibilité de la charge et l'accroissement de sa surface spécifique sont considérés comme des caractéristiques antinomiques. En effet, une grande surface spécifique suppose une augmentation des interactions entre objets de charge, et donc une mauvaise dispersion de celle-ci dans la matrice élastomère ainsi qu'une mise en œuvre malaisée.

La demanderesse décrit, dans sa demande de brevet WO2018115758, une combinaison spécifique d'un copolymère à base d'au moins un monomère éthylène et d'au moins un monomère d'acétate de vinyle et d'un agent de couplage organosilane spécifique, en présence de charges renforçantes inorganiques comprenant de la silice, permettant d'obtenir des compositions présentant une rigidité qui évolue peu en fonction de la température tout en conservant une résistance aux grandes déformations et un bon renforcement.

Dans cette demande, l'étape d'incorporation de la charge renforçante inorganique à l'élastomère est réalisée par malaxage thermomécanique à haute température (phase dite « non-productive ») dans un mélangeur interne. Au cours de cette phase dite « non-productive » sont aussi introduits dans le mélangeur interne tous les constituants nécessaires à la composition de caoutchouc à l'exception du système de réticulation aux peroxydes. Le système de réticulation est ensuite incorporé au mélange dans un mélangeur externe (au cours d'une phase dite « productive »).

Si l'utilisation d'un mélangeur interne est très efficace pour obtenir une excellente dispersion de la charge renforçante dans un élastomère diénique classiquement utilisé pour la fabrication de pneumatiques, la demanderesse a découvert que ce type de mélangeur n'est pas adapté pour la dispersion d'une charge renforçante comprenant au moins une charge inorganique renforçante dans un élastomère à base d'au moins un monomère éthylène et d'au moins un monomère d'acétate de vinyle car l'opération de mélange conduit à des pertes de matière non acceptables, pouvant être de l'ordre de 30% à 50% en poids.

La demanderesse a démontré que la mise en œuvre d'un procédé d'extrusion pour l'opération de dispersion de charges renforçantes comprenant au moins une charge inorganique renforçante, telle que par exemple de la silice, dans une composition comprenant au moins un copolymère à base d'au moins un monomère éthylène et d'au moins un monomère d'acétate de vinyle permet non seulement de réduire les pertes matières lors du procédé mais permet en outre d'assurer une bonne dispersion de la charge renforçante afin d'obtenir des compositions réticulées ayant des propriétés mécaniques au moins équivalentes à celles des compositions réticulées obtenues selon le procédé mettant en œuvre un mélangeur interne.

De façon surprenante, il est possible d'obtenir grâce au procédé d'extrusion de l'invention une qualité de dispersion de la charge renforçante supérieure à celle obtenue au moyen d'un mélangeur interne et d'obtenir ainsi des compositions réticulées ayant des propriétés mécaniques supérieures ou égales à celles des compositions réticulées obtenues selon le procédé traditionnel mettant en œuvre un mélangeur interne.

**Procédé d'extrusion**

L'extrudeuse utile aux besoins de l'invention est une extrudeuse bi-vis, de préférence co-rotative. De façon

conventionnelle, elle comprend un fourreau, au moins une zone d'alimentation en amont, au moins une zone de cisaillement Y, une double vis sans fin et une filière.

Il est entendu que l'amont se situe en tête d'extrudeuse (zone d'alimentation). Par rapport à un point de référence, une zone en aval est une zone plus près de la sortie de l'extrudeuse.

Un premier objet de l'invention concerne un procédé d'obtention d'une composition élastomérique à base d'au moins :

- un copolymère A à base d'au moins un monomère d'éthylène et d'au moins un monomère d'acétate de vinyle ; et
- une charge renforçante comprenant au moins une charge renforçante inorganique, le procédé comprenant les étapes suivantes :

  a) introduire dans une extrudeuse à double vis, de préférence co-rotative, au moins :

  - ledit copolymère A à base d'au moins un monomère d'éthylène et d'au moins un monomère d'acétate de vinyle ;
  - ladite charge renforçante comprenant au moins une charge inorganique renforçante ;
  - à titre d'agent de couplage entre ledit copolymère A et ladite charge renforçante inorganique au moins un composé organosilane de formule (I)

$$B\text{-}Z\text{-}Si(G^1)_{(3-d)}(G^2)_{(d)} \qquad (I)$$

  dans laquelle :

  - • B représente un groupe fonctionnel interagissant avec le copolymère A, le groupe B étant choisi parmi les groupes vinyliques, les atomes d'halogène, les groupes $\alpha,\beta$ énones insaturées, les groupes acryloxy, les groupes méthacryloxy, les groupes acrylamido, les groupes méthacrylamido et les groupes amino,
  - • Z représente un groupe espaceur formé d'une chaîne hydrocarbonée divalente comportant de 1 à 18 atomes de carbone et permettant de relier le groupe B à l'atome de silicium;
  - • $G^1$ identiques ou différents, représentent chacun un groupe hydrocarboné monovalent choisi parmi les alkyles, linéaires ou ramifiés, ayant de 1 à 18 atomes de carbone, les cycloalkyles ou les aryles, substitués ou non substitués, ayant de 5 à 18 atomes de carbone, alkenyloxyles, substitués ou non substitués, ayant de 2 à 18 atomes de carbone, les groupes aryloxy ou aralkyloxy, substitués ou non substitués, ayant de 6 à 18 atomes de carbone ou un groupe monovalent se présentant sous la forme $R^1\text{-}(\text{-}O\text{-}(CJ_2)_a)_b\text{-}O\text{-}$ dans laquelle J représente un hydrogène, un groupe phényle ou un groupe alkyle ayant de 1 à 4 atomes de carbone, b est un nombre entier appartenant à l'intervalle 1 à 18 et a est un nombre entier appartenant à l'intervalle 1 à 6, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone,
  - • $G^2$ identiques ou différents, représentent chacun un groupe monovalent choisi parmi le groupe hydroxyle (-OH), les alcoxyles, linéaires ou ramifiés, substitués ou non substitués, ayant de 1 à 18 atomes de carbone ;
  - • d est égal à 1, 2 ou 3 ; et

  b) récupérer en sortie d'extrudeuse la composition extrudée, la dispersion de la charge renforçante dans la composition extrudée présentant une note Z supérieure ou égale à 80, préférentiellement supérieure ou égale à 85 et de façon particulièrement préférée supérieure ou égale à 90 ;

et tel que :

- l'extrudeuse comprend plusieurs zones disposées axialement depuis une extrémité amont jusqu'à une extrémité aval de l'extrudeuse dont au moins :

  o une zone d'introduction (X) où peuvent être introduits les composants de ladite composition élastomérique ;
  o une zone de cisaillement (Y) permettant la fusion du copolymère A et la dispersion de la charge renforçante dans le copolymère A fondu ;

- la température de paroi de l'extrudeuse est maintenue dans un domaine allant de 50°C à 100°C, préférentiellement de 55°C à 85°C, pendant tout le procédé d'extrusion ;

- la vitesse de rotation de la double vis est comprise dans un domaine allant de 150 rpm à 275 rpm, préférentiellement de 200 rpm à 250 rpm pendant tout le procédé d'extrusion ;
- l'énergie mécanique spécifique transmise à la composition au cours du procédé est comprise dans un domaine allant de 1000 J/g à 14 400 J/g, plus préférentiellement de 1200 J/g à 7000 J/g, plus préférentiellement encore de 1500 J/g à 5000 J/g.

Typiquement, on alimente l'extrudeuse au moins en copolymère A par la trémie d'alimentation qui équipe de façon conventionnelle une extrudeuse.

L'extrudeuse peut comprendre en outre au moins une zone de mélangeage (Z) en aval d'une zone d'introduction (X), ladite zone (Z) permettant d'améliorer la dispersion de la charge renforçante dans la composition et/ou d'homogénéiser la composition.

La rotation de la double vis permet le convoyage de la matière introduite dans l'extrudeuse de l'amont vers l'aval de celle-ci. La vitesse de rotation est comprise dans un domaine allant de 150 rpm à 275 rpm, préférentiellement de 200 rpm à 250 rpm, pendant tout le procédé d'extrusion.

Dans l'extrudeuse, le copolymère A s'échauffe sous l'effet des contraintes mécaniques, en particulier au niveau de la zone de cisaillement (Y) en aval de la zone d'introduction. La température de paroi de l'extrudeuse est comprise dans un domaine allant de 50 à 100°C, préférentiellement de 55°C à 85°C, pendant tout le procédé d'extrusion. Cette température peut être régulée au moyen d'un fluide caloporteur circulant dans une double enveloppe de l'extrudeuse ou par tout autre moyen de régulation.

L'énergie mécanique spécifique (EMS) traduit le niveau d'énergie par unité de masse de composition extrudée transmis à ladite composition par effet mécanique pendant le procédé d'extrusion. Les paramètres opératoires lors de l'opération d'extrusion sont la vitesse de rotation des vis N, le débit d'alimentation Q et la température du fourreau. Le débit d'alimentation Q est fixé par le choix de la valeur de l'EMS, de la température d'extrusion et de la vitesse de rotation des vis.

A titre d'exemple, dans le cas d'une extrudeuse de longueur de vis de 1408 mm et de diamètre de vis de 32 mm, le débit d'alimentation Q est compris dans un domaine allant de 5 kg/h à 12 kg/h, préférentiellement de 8 kg/h à 12 kg/h.

L'énergie mécanique spécifique (EMS) transmise à la matière extrudée au cours du procédé est comprise dans un domaine allant de 1000 J/g à 14 400 J/g, plus préférentiellement de 1200 J/g à 7000 J/g, plus préférentiellement encore de 1500 J/g à 5000 J/g.

Lorsque l'EMS est inférieure à 1000 J/g, la dispersion de la charge renforçante qui comprend au moins une charge inorganique renforçante, telle qu'une silice, peut être équivalente à celle obtenue en mettant en œuvre un mélangeur interne selon le procédé traditionnel décrit plus avant. Néanmoins, les propriétés mécaniques de la composition après cuisson sont alors inférieures à celles d'une composition après cuisson obtenue en mettant en œuvre un mélangeur interne.

La température de la composition, en sortie de l'extrudeuse, est comprise dans un domaine allant de 50°C à 100°C, préférentiellement de 55°C à 90°C.

La double vis de l'extrudeuse peut comporter les éléments suivants :

- des éléments à pas direct (ou pas positif) appelés filets ;
- des éléments à pas inverse (ou pas négatif) appelés contre-filets ;
- des éléments malaxeurs.

Les éléments malaxeurs sont dépourvus d'hélicité et ont une section transversale identique à celle des autres éléments de vis. Chaque élément malaxeur comprend plusieurs disques décalés d'un certain angle les uns par rapport aux autres. Ce décalage est dit direct si les sommets des disques créent un pseudo-chenal analogue à celui d'un élément de vis à pas direct. Dans le cas contraire, on parlera de décalage inverse : les malaxeurs s'opposent alors à l'écoulement naturel de la matière et constituent, comme les éléments de vis à pas inverse, des éléments dits restrictifs.

Les éléments à pas peuvent comprendre un filet simple ou un double filet.

Le choix des éléments constitutifs de la double vis, et en particulier des éléments restrictifs, permet d'assurer une bonne homogénéisation des composants de la composition et une bonne dispersion de la charge renforçante. Ainsi, les éléments constitutifs de la double vis peuvent permettre de ralentir le convoyage de la matière extrudée au niveau des différentes zones de cisaillement, conduisant ainsi à un cisaillement plus important de la matière au niveau de ces zones, ce qui facilite la bonne homogénéisation des composants de la matière à extruder et une bonne dispersion de la charge renforçante.

Selon un mode de réalisation, chacune des vis de la double vis comprend au niveau de la zone de cisaillement Y un ou plusieurs éléments choisis parmi un élément malaxeur inverse, un élément à pas inverse à filet simple ou un élément à pas inverse à double filet, et leurs combinaisons. Les disques de l'élément malaxeur inverse sont préférentiellement décalés les uns par rapport aux autres d'un angle de 45° ou de 90°, de manière particulièrement préférée d'un angle de 45°.

L'extrudeuse comprend ainsi plusieurs zones affectées chacune à une fonction rhéologique particulière disposées axialement depuis une extrémité amont jusqu'à une extrémité aval de l'extrudeuse.

Selon un mode de réalisation, les zones de l'extrudeuse disposées axialement depuis une extrémité amont jusqu'à une extrémité aval de l'extrudeuse comprennent successivement :

- une zone d'introduction (X1) du copolymère A ;
- une zone de cisaillement (Y1) de sorte que le copolymère A y est amené dans un état fondu ;
- une zone d'introduction (X2) de la charge renforçante et de l'agent de couplage ;
- une zone de cisaillement (Y2) de sorte que la charge renforçante y est dispersée dans le copolymère A fondu.

Le copolymère A introduit dans la zone d'introduction X1 est amené dans un état fondu au niveau de la zone de cisaillement Y1 afin de faciliter l'incorporation des autres composants introduits ultérieurement dans l'extrudeuse et la dispersion de la charge renforçante comprenant au moins une charge inorganique renforçante.

La charge renforçante comprenant au moins une charge inorganique renforçante, notamment au moins une silice, et l'agent de couplage sont préférentiellement introduits dans une zone d'introduction X2, en aval de la zone d'alimentation X1 du copolymère A et de la zone de cisaillement Y1 permettant ainsi leur bonne incorporation dans le copolymère A et une bonne dispersion de la charge renforçante au niveau de la zone de cisaillement Y2.

La zone de cisaillement (Y1) peut notamment comprendre un ou plusieurs éléments choisis parmi un élément malaxeur inverse, un élément à pas inverse, et leurs combinaisons. La zone de cisaillement (Y1) peut notamment comprendre un ou plusieurs éléments malaxeurs inverses dont les disques sont avantageusement décalés les uns par rapport aux autres à 45°. La zone de cisaillement (Y1) peut notamment comprendre un ou plusieurs contre-filets à simple filet. La zone de cisaillement (Y1) peut par exemple être composée, d'amont en aval, de trois éléments malaxeurs dont les disques sont décalés les uns par rapport aux autres à 45°, d'un élément malaxeur dont les disques sont décalés les uns par rapport aux autres à 90° et d'un contrefilet à simple filet.

La zone de cisaillement (Y2) peut notamment comprendre un ou plusieurs éléments choisis parmi un élément malaxeur inverse, un élément à pas inverse, et leurs combinaisons. La zone de cisaillement (Y2) peut notamment comprendre un ou plusieurs éléments malaxeurs inverses, dont les disques sont avantageusement décalés les uns par rapport aux autres à 45°. La zone de cisaillement (Y2) peut par exemple être composée de trois éléments malaxeurs dont les disques sont décalés les uns par rapport aux autres à 45°.

La charge renforçante et l'agent de couplage peuvent être introduits séparément ou peuvent être mélangés avant leur introduction.

Selon un mode de réalisation, les zones de l'extrudeuse bi-vis disposées axialement depuis une extrémité amont jusqu'à une extrémité aval de l'extrudeuse comprennent successivement :

- une zone d'introduction (X1) du copolymère A, de la charge renforçante et de l'agent de couplage ;
- une zone de cisaillement (Y1) de sorte que le copolymère A y est amené dans un état fondu ;
- une zone de cisaillement (Y2) de sorte que la charge renforçante y est dispersée dans le copolymère A fondu.

Le copolymère A, la charge renforçante comprenant au moins une charge inorganique renforçante et l'agent de couplage peuvent être introduits dans la même zone d'introduction (X1) de l'extrudeuse. Les trois composants ou deux des composants, par exemple la charge renforçante et l'agent de couplage, peuvent être mélangés ensemble avant leur introduction. Les trois composants peuvent également être introduits séparément au niveau de la zone (X1). L'introduction des composants se fait par l'intermédiaire de pompes ou de doseurs adaptés.

Selon un mode de réalisation, le procédé selon l'invention comprend en outre l'incorporation et l'homogénéisation d'au moins un système de réticulation aux peroxydes dans la composition comprenant le copolymère A, la charge renforçante et l'agent de couplage.

Selon un mode de réalisation, le système de réticulation aux peroxydes est incorporé dans la composition extrudée comprenant le copolymère A, la charge renforçante et l'agent de couplage à l'issue de l'étape b).

Après refroidissement de la composition extrudée obtenue à l'issue de l'étape b), on incorpore alors le système de réticulation aux peroxydes à basse température (typiquement à une température inférieure ou égale à 100°C), généralement dans un mélangeur externe tel qu'un mélangeur à cylindres ; le tout est alors mélangé (phase dite phase productive) pendant quelques minutes, par exemple de 5 à 15 min. L'homme du métier sait choisir le système de réticulation aux peroxydes approprié en fonction des copolymères et polymères utilisés et de la température à laquelle s'effectuera la réticulation.

Selon des variantes du procédé, on pourrait envisager d'introduire la composition extrudée comprenant le copolymère A, la charge renforçante et l'agent de couplage obtenu à l'issue de l'étape b) dans une nouvelle extrudeuse afin d'incorporer le système de réticulation aux peroxydes. Selon un procédé non continu, la composition extrudée comprenant le copolymère A, la charge renforçante et l'agent de couplage obtenu à l'issue de l'étape b) pourrait être

réintroduite dans l'extrudeuse utilisée pour les étapes a) et b) du procédé afin de procéder à l'incorporation du système de réticulation aux peroxydes.

L'incorporation et l'homogénéisation du système de réticulation aux peroxydes peuvent être réalisées dans l'extrudeuse avant l'étape b) du procédé.

Selon un mode de réalisation, le système de réticulation est ajouté dans l'extrudeuse, avant l'étape b), dans une zone d'introduction (X3) située en aval d'une zone de cisaillement (Y2), la zone (Y2) étant une zone de cisaillement permettant la dispersion de la charge renforçante dans le copolymère A fondu.

Selon un mode de réalisation, l'extrudeuse comprend une zone de mélangeage (Z1) située en aval de la zone (X3) de sorte que le système de réticulation aux peroxydes y est mélangé dans la composition du copolymère A, de la charge renforçante et de l'agent de couplage.

La zone de mélangeage (Z1) peut être une zone de cisaillement, permettant d'améliorer la dispersion dans la composition, et/ou une zone de distribution, permettant d'améliorer l'homogénéisation de la composition.

Lorsque l'incorporation et l'homogénéisation du système de réticulation aux peroxydes sont réalisées dans l'extrudeuse avant l'étape b) dudit procédé, le système de réticulation aux peroxydes est incorporé préférentiellement en fin de ligne d'extrusion de façon à laisser le temps à la température de la composition de redescendre, en particulier après l'étape de dispersion de la charge renforçante qui s'accompagne d'une élévation de la température de la composition dans l'extrudeuse. Il est en effet important que la réaction de réticulation ne démarre pas dans l'extrudeuse. Le système de réticulation aux peroxydes doit toutefois être incorporé suffisamment en amont de l'extrudeuse de façon à garantir sa bonne homogénéité dans la composition.

Les éléments constitutifs de la double vis peuvent être choisis de façon à ce que la composition comprenant le copolymère A, la charge renforçante et l'agent de couplage ait suffisamment refroidi pour permettre l'incorporation du système de réticulation aux peroxydes.

Par exemple, lorsque le système de réticulation aux peroxydes est constitué de peroxide de dicumyle, son incorporation doit préférentiellement être effectuée à une température inférieure à 90°C.

Selon l'un quelconque des modes de réalisation décrits précédemment, outre les zones de cisaillement (Y1) et (Y2), l'extrudeuse comprend une zone de mélangeage (Z1), telle que décrite précédemment. Cette zone de de mélangeage (Z1) peut permettre l'incorporation du système de réticulation aux peroxydes. Cependant, même sans étape d'introduction du système de réticulation dans l'extrudeuse, l'extrudeuse peut comprendre une zone de mélangeage (Z1) permettant d'améliorer la dispersion de la charge renforçante et/ou d'homogénéiser la composition.

La zone de mélangeage (Z1) peut notamment comprendre un ou plusieurs éléments choisis parmi un élément malaxeur inverse, un élément à pas inverse, et leurs combinaisons. La zone de mélangeage (Z1) peut notamment comprendre un ou plusieurs éléments malaxeurs inverses dont les disques sont avantageusement décalés les uns par rapport aux autres à 45°. La zone de mélangeage (Z1) peut notamment comprendre un ou plusieurs contre-filets à double-filet. La zone de mélangeage (Z1) peut par exemple être composée, d'amont en aval, de deux éléments malaxeurs inverses dont les disques sont décalés les uns par rapport aux autres à 45° et de deux contre-filets à double-filet.

Les compositions ainsi obtenues en sortie d'extrudeuse sont ensuite calandrées soit sous la forme de plaques (épaisseur de 2 à 3 mm) ou de feuilles fines de caoutchouc pour la mesure de leurs propriétés physiques ou mécaniques après cuisson, soit sous la forme de profilés utilisables directement, après découpage et/ou assemblage aux dimensions souhaitées, par exemple comme produits semi-finis pour pneumatiques, en particulier comme bandes de roulement de pneumatiques.

Selon un mode de réalisation, le procédé comprend en outre une filière de sortie de l'extrudeuse permettant d'obtenir une composition élastomérique directement assemblable sur le tambour de confection d'un pneumatique, notamment directement assemblable sur la carcasse d'un pneumatique.

La réticulation (ou cuisson) est conduite de manière connue à une température généralement comprise dans un domaine allant de 130°C à 200°C, sous pression de quelques dizaines de bar, pendant un temps suffisant qui peut varier par exemple de 5 à 90 min en fonction notamment de la température de cuisson, du système de réticulation adopté, de la cinétique de réticulation de la composition considérée ou encore de la taille du pneumatique.

Le procédé d'extrusion permet de générer une composition à base d'un copolymère A et d'un agent de couplage, ladite composition présentant une dispersion de la charge renforçante qui comprend au moins une charge inorganique renforçante, de qualité au moins similaire à celle obtenue en utilisant un mélangeur interne traditionnel.

En mettant en œuvre le procédé d'extrusion selon l'invention, il est possible d'obtenir une qualité de dispersion de la charge renforçante supérieure à celle obtenue au moyen d'un mélangeur interne et d'obtenir ainsi après cuisson des compositions réticulées ayant des propriétés mécaniques (telles qu'évaluées par les valeurs d'allongement à la rupture, de contrainte à la rupture, de contrainte à 50% d'allongement, d'énergie de rupture/déchirabilité) supérieures ou tout au moins équivalentes à celles de compositions identiques obtenues selon le procédé traditionnel mettant en œuvre un mélangeur interne.

En outre, le procédé selon l'invention permet de limiter les pertes de matière obtenues lors de l'utilisation d'un mélangeur interne.

**Composition mise en œuvre selon le procédé de l'invention**

◦ Copolymère A

La composition élastomérique mise en œuvre selon le procédé de l'invention comprend au moins un copolymère A, de préférence à un taux supérieur ou égal à 50 pce, ledit copolymère A étant un copolymère à base d'au moins un monomère d'éthylène et d'au moins un monomère d'acétate de vinyle.

Il est entendu que d'autres monomères différents des monomères d'éthylène et d'acétate de vinyle peuvent être optionnellement présents dans le copolymère. Ce ou ces monomères différents (monomères X) présentent des fonctions polymérisables de réactivité identique ou sensiblement identique avec les monomères E et les monomères VA et peuvent être distribués statistiquement le long de la chaîne du copolymère.

Les monomères X peuvent être choisis parmi les esters d'acide carboxyliques insaturés tels que par exemples les acrylates d'alkyle en C1-C10 ou les méthacrylates d'alkyles en C1-C10, les alpha-oléfines telles que le propène, le 1-butène, 1-hexène, les monomères porteurs d'une fonction époxyde, les monomères porteurs d'une fonction anhydride, les monomères porteurs d'une fonction acide carboxylique. Conviennent notamment à titre de monomère X, les monomères suivants : les acrylates d'alkyle en C1-C10, les méthacrylates d'alkyle en C1-C10, le méthacrylate de glycidyle, l'acrylate de glycidyle, l'anhydride maléique, les hémi-esters de l'anhydride maléique, l'acide acrylique et l'acide méthacrylique.

La composition peut comprendre un ou plusieurs copolymères A, c'est-à-dire un mélange ou un coupage de deux ou plusieurs copolymères A différents. Par exemple, la composition peut comprendre un copolymère d'éthylène et d'acétate de vinyle et un terpolymère d'éthylène/acétate de vinyle/monomère X ou bien lorsque le copolymère A est constitué de monomère d'éthylène et d'acétate de vinyle, la composition peut comprendre des copolymères ayant des teneurs molaires en monomères d'éthylène différentes.

Le copolymère A (ou le mélange de copolymères A) est (sont) le copolymère majoritaire de la composition de l'invention, c'est-à-dire qu'il(s) représente(nt) au moins 50% en poids du poids total des polymères de la composition. Autrement dit, le ou les copolymères A est (sont) présent(s) dans la composition à un taux supérieur ou égal à 50 pce, de préférence strictement supérieur à 50 pce.

Préférentiellement, le taux molaire de monomère d'éthylène dans le copolymère A est supérieur ou égal à 51%, de préférence supérieur ou égal à 55%. Plus préférentiellement, le taux molaire de monomère d'éthylène dans le copolymère A va de 57% à 90%, de manière encore plus préférée va de 57% à 85%.

Préférentiellement, le copolymère A présente une masse molaire moyenne en nombre Mn comprise dans un domaine allant de 13000 g/mol à 55 000 g/mol, plus préférentiellement allant de 14 000g/mol à 50 000 g/mol. La mesure de la Mn du copolymère A s'effectue classiquement par chromatographie d'exclusion stérique à indice de réfraction (SEC-RI).

Lorsque le copolymère A résulte de la copolymérisation de monomère d'éthylène, d'acétate de vinyle et d'un ou plusieurs monomères X, le pourcentage molaire du ou des monomères X (y compris celui des monomères X préférés ci-dessus) est strictement inférieur à 5% ; préférentiellement le taux molaire de monomère d'éthylène est supérieur ou égal à 51%. De préférence, le pourcentage molaire du ou des monomères X (y compris celui des monomères X préférés ci-dessus) va de 0,1% à 5% ; le taux molaire de monomère d'éthylène est avantageusement supérieur ou égal à 51%. Préférentiellement, lorsque le copolymère A résulte de la copolymérisation de monomère d'éthylène, d'acétate de vinyle et d'un ou plusieurs monomères X, le pourcentage molaire du ou des monomères X (y compris celui des monomères X préférés ci-dessus) est strictement inférieur à 5 % ; le taux molaire de monomère d'éthylène va avantageusement de 57% à 85%.

Préférentiellement, le copolymère A est constitué de monomères d'éthylène et de monomères d'acétate de vinyle. Autrement dit la somme des pourcentages molaires de monomères d'éthylène et de monomères d'acétate de vinyle dans le copolymère A est égale à 100%.

Les copolymères A sont préférentiellement des polymères statistiques. Ils peuvent être notamment obtenus par polymérisation haute pression des monomères correspondants avec les procédés connus de l'homme du métier. Ces copolymères peuvent être notamment obtenus selon les procédés décrits dans les documents EP0341499A2 et EP0307755A2.

Les copolymères A décrits précédemment présentent une température de transition vitreuse Tg dans la très grande majorité des cas qui est négative (c'est-à-dire inférieure à 0°C, mesurée à pression atmosphérique). La Tg des copolymères A décrits ci-dessus est mesurée de manière connue par DSC (Differential Scanning Calorinetry) selon la norme ASTM D3418 de 1999.

Les copolymères A sont disponibles commercialement notamment auprès de fournisseurs tels que Arkema, E.I du Pont de Nemours and Company, Arlanxeo.

Selon un mode de réalisation de la composition selon le procédé de l'invention, le taux de copolymère A ou du mélange de copolymères A dans la composition est égal à 100 pce.

o Polymère C

La composition peut comprendre, en outre, au moins un polymère C différent du ou des copolymères A.

De préférence, ce polymère C est un élastomère diénique.

Par élastomère « diénique » qu'il soit naturel ou synthétique, doit être compris un élastomère constitué au moins en partie (c'est-à-dire un homopolymère ou un copolymère) de monomère(s) diène(s) (i.e., porteur(s) de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en mol) ; c'est ainsi que des élastomères diéniques tels que les caoutchoucs de butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15% (en mol)). Dans la catégorie des élastomères diéniques "essentiellement insaturés", on entend en particulier par élastomère diénique « fortement insaturé » un élastomère diénique ayant un taux en mol de motifs d'origine diénique (diènes conjugués) qui est supérieur à 50% (en mol). Ces définitions étant données, on entend plus particulièrement par élastomère diénique susceptible d'être utilisé dans la composition :

(a) - tout homopolymère d'un monomère diène conjugué, notamment tout homopolymère obtenu par polymérisation d'un monomère diène conjugué ayant de 4 à 12 atomes de carbone ;

(b) - tout copolymère obtenu par copolymérisation d'un ou plusieurs diènes conjugués entre eux ou avec un monomère d'éthylène ou avec un ou plusieurs composés de vinyle aromatique ayant de 8 à 20 atomes de carbone ;

(c) - un copolymère ternaire obtenu par copolymérisation d'éthylène, d'une $\alpha$-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;

(d) - un copolymère d'isobutène et d'isoprène (caoutchouc butyle), ainsi que les versions halogénées, en particulier chlorées ou bromées, de ce type de copolymère. Bien qu'elle s'applique à tout type d'élastomère diénique, l'homme du métier du pneumatique comprendra que ce mode de réalisation est de préférence mis en œuvre avec des élastomères diéniques essentiellement insaturés, en particulier du type (a) ou (b) ci-dessus.

Les élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères diéniques peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à une charge inorganique renforçante telle que silice, on peut citer par exemple des groupes fonctionnels silanol ou polysiloxane ayant une extrémité silanol (tels que décrits par exemple dans FR2740778A1 ou US6013718, et WO2008/141702A1), des groupes alcoxysilane (tels que décrits par exemple dans FR2765882A1 ou US5977238), des groupes carboxyliques (tels que décrits par exemple dans WO01/92402A1 ou US6815473, WO2004/096865A2 ou US2006/0089445) ou encore des groupes polyéthers (tels que décrits par exemple dans EP1127909A1 ou US6503973, WO2009/000750A1 et WO2009/000752A1).

On peut aussi citer comme élastomères diéniques fonctionnels ceux préparés par l'utilisation d'un amorceur fonctionnel, notamment ceux portant une fonction amine ou étain (voir par exemple WO2010/072761A1).

Comme autres exemples d'élastomères diéniques fonctionnalisés utilisable dans l'invention, on peut citer également des élastomères (tels que BR, NR ou IR) du type époxydés.

De préférence, le polymère C est un élastomère diénique et a un taux molaire de motif diénique inférieur à 15 %.

◦ Charge renforçante

Comme indiqué précédemment, la composition élastomérique mise en œuvre selon le procédé de l'invention comporte au moins une charge renforçante, ladite charge renforçante comprend au moins une charge inorganique renforçante.

*Charge inorganique renforçante

Comme charges renforçantes inorganiques conviennent notamment conviennent notamment des charges minérales du type siliceux, préférentiellement la silice ($SiO_2$) ou du type alumineux, en particulier l'alumine ($Al_2O_3$). La

silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment de 60 à 300 $m^2/g$. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP » ainsi que la silice « Zeosil Premium 200 » de la société Solvay, la silice « Hi-Sil EZ150G » de la société PPG, les silices « Zeopol 8715, 8745 et 8755 » de la Société Huber, les silices à haute surface spécifique telles que décrites dans la demande WO 03/016387A1.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

À titre d'autres exemples de charges inorganiques susceptibles d'être utilisées dans les compositions de caoutchouc de l'invention peuvent être encore cités les charges minérales non siliceuses, par exemple du type alumineux, en particulier de l'alumine ($Al_2O_3$), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2. On peut citer notamment les alumines « Baikalox A125 » ou « CR125 » (société Baïkowski), « APA-100RDX » (Condéa), « Aluminoxid C » (Evonik) ou « AKP-G015 » (Sumitomo Chemicals).

L'état physique sous lequel se présente la charge renforçante inorganique est indifférent, que ce soit sous forme de poudre, de microperles, de granulés, ou encore de billes. Préférentiellement, la charge renforçante est majoritairement une charge renforçante inorganique (de préférence une silice, notamment de précipitation), c'est-à-dire qu'elle comprend plus de 50 % (>50%) en poids d'une charge renforçante inorganique, plus préférentiellement encore plus de 60 % en poids d'une charge renforçante inorganique, plus préférentiellement encore plus de 85% en poids d'une charge renforçante inorganique telle qu'une silice, notamment de précipitation, par rapport au poids total de la charge renforçante.

Plus préférentiellement, la charge renforçante inorganique consiste, notamment essentiellement, en de la silice, notamment de précipitation.

Il est entendu que l'homme du métier sait appliquer le taux de charge renforçante en fonction des applications visées de la composition élastomérique.

Selon un mode de réalisation, le taux de la charge renforçante, dans la composition élastomérique conforme à l'invention est supérieur ou égal à 20 parties en poids pour cent parties d'élastomère. De préférence, le taux de la charge renforçante, dans la composition élastomérique conforme à l'invention va de de 20 pce à 100 pce, plus préférentiellement de 30 à 80 pce, plus préférentiellement de 40 à 70 parties en poids pour cent parties d'élastomère.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et le ou les copolymère(s) A. A titre d'exemple, on peut citer par exemple des noirs de carbone pour pneumatiques tels que décrits par exemple dans les documents brevet WO96/37547A2 et WO 99/28380A1.

*Noir de carbone

Selon un mode de réalisation de l'invention, la charge renforçante peut comprendre au moins un noir de carbone.

Selon cette option, le noir de carbone est utilisé à un taux inférieur ou égal à 20 pce, plus préférentiellement inférieur ou égal à 10 pce (par exemple le taux de noir de carbone peut être compris dans un domaine allant de 0,5 à 20 pce, notamment allant de 1 à 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante. Ces plages préférentielles s'appliquent à l'un quelconque des modes de réalisation de l'invention. Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs des séries 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

◦ Agent de couplage organosilane de formule (I)

Comme vu précédemment, la composition élastomérique de l'invention comporte, à titre d'agent de couplage entre ledit copolymère A et ladite charge renforçante inorganique, au moins un composé organosilane de formule (I)

$$B\text{-}Z\text{-}Si(G^1)_{(3\text{-}d)}(G^2)_{(d)} \qquad (I)$$

dans laquelle :

- B représente un groupe fonctionnel interagissant avec le copolymère A, le groupe B étant choisi parmi les groupes vinyliques, les atomes d'halogène, les groupes $\alpha$, $\beta$ énones insaturées, les groupes acryloxy, les groupes méthacryloxy, les groupes acrylamido, les groupes méthacrylamido et les groupes amino,
- Z représente groupe espaceur formé d'une chaîne hydrocarbonée divalente comportant de 1 à 18 atomes de carbone et permettant de relier le groupe B à l'atome de silicium;
- $G^1$ identiques ou différents, représentent chacun un groupe hydrocarboné monovalent choisi parmi les alkyles, linéaires ou ramifiés, ayant de 1 à 18 atomes de carbone, les cycloalkyles ou les aryles, substitués ou non substitués, ayant de 5 à 18 atomes de carbone, alkenyloxyles, substitués ou non substitués, ayant de 2 à 18 atomes de carbone, les groupes aryloxy ou aralkyloxy, substitués ou non substitués, ayant de 6 à 18 atomes de carbone, ou un groupe monovalent se présentant sous la forme $R^1\text{-}(\text{-}O\text{-}(CJ_2)_a)_b\text{-}O\text{-}$ dans laquelle J représente un hydrogène, un groupe phényle ou un groupe alkyle ayant de 1 à 4 atomes de carbone, b est un nombre entier appartenant à l'intervalle 1 à 18 et a est un nombre entier appartenant à l'intervalle 1 à 6, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone ;
- $G^2$ identiques ou différents, représentent chacun un groupe monovalent choisi parmi le groupe hydroxyle (-OH), les alcoxyles, linéaires ou ramifiés, substitués ou non substitués, ayant de 1 à 18 atomes de carbone,
- d est égal à 1, 2 ou 3.

Un tel agent de couplage, au moins bifonctionnel, a comme formule générale simplifiée « Y-W- X », dans laquelle :

- Y représente un groupe fonctionnel (fonction « Y ») qui est capable de se lier physiquement et/ou chimiquement à la charge renforçante inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction « X ») capable de se lier physiquement et/ou chimiquement au copolymère A;
- W représente un groupe divalent permettant de relier « Y » et « X ».

Les agents de couplage ne doivent en particulier pas être confondus avec de simples agents de recouvrement de la charge inorganique qui, de manière connue, peuvent comporter la fonction « Y » active vis-à-vis de la charge renforçante inorganique mais sont en tout cas dépourvus de la fonction « X » active vis-à-vis du copolymère A. Ainsi, pour les composés organosilane de formule générale (I), l'homme du métier comprendra immédiatement que la fonction notée « X » dans la définition ci-dessus destinée à assurer la liaison avec le copolymère A est assurée par le groupe fonctionnel B tandis que la fonction notée « Y » dans la définition ci-dessus destinée à assurer la liaison avec la charge renforçante inorganique est assurée par les groupes silylés $Si(G^1)_{(3\text{-}d)}(G^2)_{(d)}$-et que le groupe espaceur « W » est assuré par le groupe Z qui est un groupe divalent permettant de relier le groupe fonctionnel B et les groupes silylés $(G^1)_{(3\text{-}d)}(G^2)_{(d)}$ via l'atome de silicium.

Par « groupe vinylique » au sens de la présente invention, on entend un groupe chimique répondant à la formule

[Chem 1]

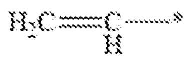

dans laquelle le symbole (*) représente le rattachement au groupe espaceur Z.

Par « halogène » au sens de la présente invention, on entend un atome de fluor, chlore, brome ou iode ; de préférence de brome.

Par « groupe $\alpha$,$\beta$ énone insaturée », on entend un groupe chimique répondant à la formule suivante :

[Chem 2]

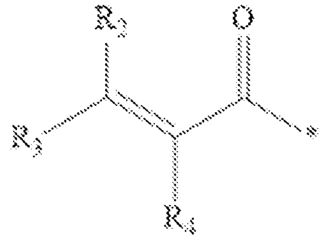

dans laquelle :

- le symbole (*) représente le rattachement au groupe espaceur Z,
- R2, R3, R4, identiques ou différents représentent un atome d'hydrogène, un alkyle linéaire ou ramifié ayant de 1 à 4 atomes de carbone, un phényl substitué ou non par un alkyle ayant de 1 à 4 atomes de carbone.

Par « groupe acryloxy, méthacryloxy, acrylamido et méthacrylamido » on entend au sens de la présente invention un groupe chimique répondant à la formule suivante :

[Chem 3]

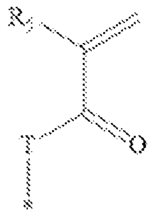

dans laquelle :

- le symbole (*) représente le rattachement au groupe espaceur Z,
- R5 est un atome d'hydrogène (pour les groupe acryloxy et acrylamido) ou un méthyl (pour les groupes méthacryloxy et méthacrylamido),
- T est un atome d'oxygène (pour les groupes acryloxy et méthacryloxy) ou un atome d'azote (pour les groupes acrylamido et méthacrylamido).

Préférentiellement, dans l'agent de couplage organosilane de formule générale (I), la chaîne hydrocarbonée du groupe espaceur Z est interrompue par un ou plusieurs hétéroatomes choisis par les atomes d'oxygène, de soufre et d'azote. Préférentiellement, dans l'agent de couplage organosilane de formule générale (I), la chaîne hydrocarbonée du groupe espaceur Z est choisie parmi les alkylènes en C1-C18 linéaires ou ramifiés, les alkylarylènes en C7-C12 et les arylalkylènes en C7-C12, de préférence entre alkylènes en C1-C8 linéaires ou ramifiés, les alkylarylènes en C7-C10 et les arylalkylènes en C7-C10.

Préférentiellement, dans l'agent de couplage organosilane de formule générale (I), $G^1$ identiques ou différents, représentent chacun un groupe hydrocarboné monovalent choisi parmi les alkyles, linéaires ou ramifiés, ayant de 1 à 10 atomes de carbone, les cycloalkyles ou les aryles, substitués ou non substitués, ayant de 5 à 10 atomes de carbone, ou un groupe monovalent se présentant sous la forme $R^1$-(-O-$(CJ_2)_a$)$_b$-O- dans laquelle J représente un hydrogène ou un groupe alkyle ayant de 1 à 4 atomes de carbone, b est un nombre entier appartenant à l'intervalle 1 à 4 et a est un nombre entier appartenant à l'intervalle 1 à 4, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone ; $G^2$ identiques ou différents, représentent chacun un groupe monovalent choisi parmi le groupe hydroxyle (-OH), les alcoxyles, linéaires ou ramifiés, substitués ou non substitués, ayant de 1 à 10 atomes de carbone, et d est égal à 1, 2 ou 3.

Plus préférentiellement, dans l'agent de couplage organosilane de formule générale (I), $G^1$ identiques ou différents, représentent chacun un groupe hydrocarboné monovalent choisi parmi les alkyles, linéaires ou ramifiés, ayant de 1 à 4 atomes de carbone, ou un groupe monovalent se présentant sous la forme $R^1$-(-O-$(CJ_2)_a$)$_b$-O- dans laquelle J représente un hydrogène ou un groupe alkyle ayant de 1 à 4 atomes de carbone, b est un nombre entier appartenant à

l'intervalle 1 à 4 et a est un nombre entier appartenant à l'intervalle 1 à 4, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone et $G^2$ identiques ou différents, représentent chacun un groupe monovalent choisi parmi le groupe hydroxyle (-OH), les alcoxyles, linéaires ou ramifiés, substitués ou non substitués, ayant de 1 à 4 atomes de carbone, et d est égal à 1, 2 ou 3.

Préférentiellement, dans l'agent de couplage organosilane de formule générale (I), le groupe B est choisi parmi les atomes d'halogène (de préférence le brome), les groupes acryloxy, les groupes méthacryloxy, les groupes acrylamido, les groupes méthacrylamido et les groupes amino.

Avantageusement, les agents de couplage organosilane de formule générale (I) préférés sont ceux pour lesquels :

- le groupe B étant choisi parmi les atomes d'halogène (de préférence), le brome, les groupes acryloxy, les groupes méthacryloxy, les groupes acrylamido, les groupes méthacrylamido et les groupes amino ;
- la chaîne hydrocarbonée du groupe Z est choisie parmi les alkylènes en C1-C8 linéaires ou ramifiés, les alkylarylènes en C7-C10 et les arylalkylènes en C7-C10 ;
- $G^1$ identiques ou différents, représentent chacun un groupe hydrocarboné monovalent choisi parmi les alkyles, linéaires ou ramifiés, ayant de 1 à 10 atomes de carbone, les cycloalkyles ou les aryles, substitués ou non substitués, ayant de 5 à 10 atomes de carbone ou un groupe monovalent se présentant sous la forme $R^1$-(-O-$(CJ_2)_a)_b$-O- dans laquelle J représente un hydrogène ou un groupe alkyle ayant de 1 à 4 atomes de carbone, b est un nombre entier appartenant à l'intervalle 1 à 4 et a est un nombre entier appartenant à l'intervalle 1 à 4, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone ;
- $G^2$ identiques ou différents, représentent chacun un groupe monovalent choisi parmi le groupe hydroxyle (-OH), les alcoxyles, linéaires ou ramifiés, substitués ou non substitués, ayant de 1 à 10 atomes de carbone, et
- d est égal à 1, 2 ou 3.

Plus préférentiellement encore, les agents de couplage organosilane de formule générale (I) préférés sont ceux pour lesquels :

- le groupe B est choisi parmi les atomes d'halogène (de préférence le brome), les groupes acryloxy, les groupes méthacryloxy, les groupes acrylamido, les groupes méthacrylamido et les groupes amino ;
- la chaîne hydrocarbonée du groupe Z est choisie parmi les alkylènes en C1-C8 linéaires ou ramifiés ;
- $G^1$ identiques ou différents, représentent chacun un groupe hydrocarboné monovalent choisi parmi les alkyles, linéaires ou ramifiés, ayant de 1 à 4 atomes de carbone ou un groupe monovalent se présentant sous la forme $R^1$-(-O-$(CJ_2)_a)_b$-O- dans laquelle J représente un hydrogène ou un groupe alkyle ayant de 1 à 4 atomes de carbone, b est un nombre entier appartenant à l'intervalle 1 à 4 et a est un nombre entier appartenant à l'intervalle 1 à 4, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone ;
- $G^2$ identiques ou différents, représentent chacun un groupe monovalent choisi parmi le groupe hydroxyle (-OH), les alcoxyles, linéaires ou ramifiés, substitués ou non substitués, ayant de 1 à 4 atomes de carbone ; et
- d est égal à 1, 2 ou 3.

Plus préférentiellement encore, les agents de couplage organosilane de formule générale (I) préférés sont ceux pour lesquels :

- le groupe B est choisi parmi les atomes d'halogène (de préférence le brome), les groupes acryloxy, les groupes méthacryloxy, les groupes acrylamido, les groupes méthacrylamido et les groupes amino ;
- la chaîne hydrocarbonée du groupe Z est choisie parmi les alkylènes en C1-C8 linéaires ou ramifiés ;
- $G^1$ identiques ou différents, représentent chacun un groupe hydrocarboné monovalent choisi parmi le méthyle, l'éthyle, le propyle, le butyle ;
- $G^2$ identiques ou différents, représentent chacun un groupe hydrocarboné monovalent choisi parmi le méthoxy, l'éthoxy, le propyloxy, le butyloxy et l'hydroxyle (-OH) ; et
- d est égal à 1, 2, 3, de préférence est égal à 3.

Préférentiellement, les agents de couplage organosilane de formule (I) qui conviennent à l'invention sont : le 4-bromobutyltriméthoxysilane, le 7-bromoheptyltriméthoxysilane, le 5-bromopentyltriméthoxysilane, le 3-bromopropyltriméthoxysilane, le 11-bromoundecyltriméthoxysilane, le 3-chloroisobutyltriméthoxysilane, le (p-chlorométhyl)phenyltriméthoxysilane, le chlorométhyltriéthoxysilane, le chlorométhyltriisopropylsilane, le chlorométhyltriméthoxysilane, le 3-

chloroproprlyltriéthoxysilane, le 3-chloroproprlyltriméthoxysilane, le 11-chloroundecyltriéthoxysilane, le 11-chloroounde-cyltriméthoxysilane, le 3-iodoproprlyltriméthoxysilane, le chlorométhylméthyldiéthoxysilane, le 3-chloropropylméthyldiéthoxysilane, le 3-chloropropylméthyldiisopropoxysilane, le 3-chloropropylméthyldiméthoxysilane, le (3-iodopropyl)méthyldiisopropoxysilane, le 3-acrylamidopropyltriméthoxysilane, l'acryloxyméthyltriméthoxysilane, l'(acryloxyméthyl)phényléthyltriméthoxysilane, le (3-acryloxypropyl)triméthoxysilane, le (3-méthacrylamidopropyl)triéthoxysilane, le méthacryloxyméthyltriéthoxysilane, le méthacryloxyméthyltriméthoxysilane, le méthacryloxypropyltriéthoxysilane, le méthacryloxypropyltriisopropoxysilane, le méthacryloxypropyltriméthoxysilane, le méthacryloxypropyltris(methoxyethoxy)silane, le 3-(acryloxypropyl)méthyldiéthoxysilane, le 3-(acryloxypropyl)méthyldiméthoxysilane, le (méthacryloxyméthyl) methyldiéthoxysilane, le (méthacryloxyméthyl)methyldiméthoxysilane, le méthacryloxypropylméthyldiéthoxysilane, le méthacryloxypropylméthyldiméthoxysilane, le 3-(acryloxypropyl)diméthylméthoxysilane, le (méthacryloxyméthyl)diméthyléthoxysilane, le méthacryloxypropyldiméthyléthoxysilane, le méthacryloxypropyldiméthylméthoxysilane, le 4-aminobutyltriéthoxysilane, le 4-amino-3,3-diméthylbutyltriméthoxysilane, le 3-aminopropyléthoxysilane, le 3-aminopropyltriméthoxysilane, le 3-aminopropyltri(méthoxyéthoxyéthoxy)silane, le 11-aminoundecyltriéthoxysilane, le 4-amino-3,3-diméthylbutylméthyldiméthoxysilane et le 3-aminopropylméthyldiéthyloxysilane.

Plus préférentiellement, les agents de couplage organosilane de formule (I) qui conviennent à l'invention sont : le 4-bromobutyltriméthoxysilane, le 7-bromoheptyltriméthoxysilane, le 5-bromopentyltriméthoxysilane, le 3-bromopropyltriméthoxysilane, le chlorométhyltriéthoxysilane, le chlorométhyltriisopropylsilane, le chlorométhyltriméthoxysilane, le 3-chloroproprlyltriéthoxysilane, le 3-chloroproprlyltriméthoxysilane, le 3-iodoproprlyltriméthoxysilane, le 3-acrylamidopro-pyltriméthoxysilane, l'acryloxyméthyltriméthoxysilane, le (3-acryloxypropyl)triméthoxysilane, le (3-méthacrylamidopropyl)triéthoxysilane, le méthacryloxyméthyltriéthoxysilane, le méthacryloxyméthyltriméthoxysilane, le méthacryloxypropyltriéthoxysilane, le méthacryloxypropyltriisopropopysilane, le méthacryloxypropyltriméthoxysilane, le méthacryloxypropyltris(methoxyethoxy)silane, le 4-aminobutyltriéthoxysilane, le 4-amino-3,3-diméthylbutyltriméthoxysilane, le 3-aminopropyléthoxysilane et le 3-aminopropyltriméthoxysilane.

Plus préférentiellement encore, les agents de couplage organosilane de formule (I) qui conviennent à l'invention sont : le 4-bromobutyltriméthoxysilane, le 7-bromoheptyltriméthoxysilane, le 5-bromopentyltriméthoxysilane, le 3-bromopropyltriméthoxysilane, le 3-acrylamidopropyltriméthoxysilane, l'acryloxyméthyltriméthoxysilane, le (3-acryloxypropyl)triméthoxysilane, le (3-méthacrylamidopropyl)triéthoxysilane, le méthacryloxyméthyltriéthoxysilane, le méthacryloxyméthyltriméthoxysilane, le méthacryloxypropyltriéthoxysilane, le méthacryloxypropyltriméthoxysilane, le 4-aminobutyltriéthoxysilane, le 3-aminopropyléthoxysilane et le 3-aminopropyltriméthoxysilane.

L'utilisation d'un organosilane de formule générale (I) spécifique en tant qu'agent de couplage permet d'obtenir des compositions dont la matrice élastomérique comprend majoritairement un ou plusieurs copolymères A tels que décrits ci-dessus, et qui présentent notamment de bonnes propriétés de renforcement.

Il est bien entendu que l'homme du métier sait ajuster le taux de l'agent de couplage organosilane de formule générale (I) en fonction du taux de charge renforçante inorganique utilisée dans les compositions conforme à l'invention.

Préférentiellement, le taux d'agent de couplage organosilane de formule générale (I) est inférieur ou égal à 20 pce, de préférence va de 0,2 à 12 pce, de préférence de 0,5 à 8 pce.

Préférentiellement, le taux d'agent de couplage organosilane de formule générale (I) est supérieur ou égal à 1% en poids par rapport au poids de la charge renforçante inorganique. De préférence, le taux d'agent de couplage organosilane de formule générale (I) va de 0,5% à 15%, de preférence de 1% à 15% en poids par rapport au poids de la charge renforçante inorganique.

Les agents de couplage organosilane de formule générale (I) et leurs procédés d'obtention sont bien connus de l'homme du métier et sont disponibles commercialement auprès de Gelest, Evonik et Bluestar.

◦ Additifs divers

Les compositions de caoutchouc mises en œuvre selon le procédé de l'invention peuvent comporter également tout ou partie des additifs usuels habituellement utilisés dans les compositions de caoutchouc notamment destinées à la fabrication d'articles semi-fini, tel que des bandes de roulement, et finis tels que des pneumatiques, comme par exemple des pigments, des agents de protection tels que cires anti-ozone comme par exemple de la paraffine, des anti-ozonants chimiques, des anti-oxydants, des agents anti-fatigue et des plastifiants.

◦ Système de réticulation aux peroxydes

Comme précisé précédemment, la composition mise en œuvre selon le procédé de l'invention comprend au moins un système de réticulation aux peroxydes.

Parmi les peroxydes, bien connus de l'homme de l'art, il est préférable d'utiliser pour l'invention au moins un peroxyde choisi dans la famille des peroxydes organiques. Par peroxyde organique, on entend toute molécule hydrocarbonée comprenant une fonction de type peroxy O-O. Par exemple, les peroxydes organiques utiles sont ceux qui se

décomposent rapidement dans l'intervalle de température de 140°C à 220°C.

Les peroxydes organiques peuvent être avantageusement choisis parmi les familles des peroxydes de dialkyle ou les peroxyesters. En particulier, le ou les peroxyde(s) organique(s) peut (peuvent) être choisi(s) parmi le 2-éthylperhexanoate de tert-butyle, le peroxyde de dicumyle, le peroxyde de benzoyle, le peroxyde de dibenzoyle, le peroxyde de ditertbutyle, le peroxyde de tert-butylcumyle, le 2,5-bis (tert-butylperoxy)-2,5-diméthylhexane, et les mélanges de ces derniers.

Il existe dans le commerce divers produits conditionnés, connus sous leurs marques de fabrique ; on peut citer : le « Dicup » de la société Hercules Powder Co., le « Perkadox Y12 » de la Société Noury van der Lande, le « Peroximon F40 » de la société Montecatini Edison S.p.A., le « Trigonox » de la Société Noury van der Lande, le « Varox » de la société R.T.Vanderbilt Co., ou encore le « Luperko », de la société Wallace & Tiernan, Inc.

Préférentiellement, la quantité de peroxydes à utiliser pour les besoins de l'invention est inférieure ou égale à 3 pce. De préférence, la quantité de peroxydes dans la composition est comprise dans un domaine allant de 0,1 à 3 pce. Plus préférentiellement, la quantité de peroxydes dans la composition est comprise dans un domaine allant de 0,2 à 2 pce. Le système de réticulation aux peroxydes peut comprendre en outre un coagent et ou un solvant tels que ceux décrits notamment dans le document WO2011/067504.

**Article semi-fini pour pneumatique**

Un autre objet de la présente invention concerne un article semi-fini pour pneumatique comprenant au moins une composition élastomérique réticulable susceptible d'être obtenue par le procédé décrit ci-dessus.

Un produit semi-fini est un produit en caoutchouc destiné à la fabrication de pneumatique. Ce peut être tout type bande de gommes, telle que notamment des bandes de roulement, des sous-couches, des nappes d'armature de sommet (par exemple des nappes de travail, des nappes de protection ou des nappes de frettage), de nappes d'armature de carcasse, des nappes de flancs, des nappes de bourrelets, des nappes de protecteurs, des nappes de sous-couches, des nappes de blocs de caoutchouc et autres nappes assurant l'interface entre les zones précitées des pneumatiques. De préférence, l'article semi-fini est une bande de roulement.

**Pneumatique**

L'invention a également pour objet un pneumatique comprenant au moins un article semi-fini pour pneumatique tel que mentionné ci-dessus ou comprenant au moins une composition élastomérique obtenue selon le procédé décrit ci-dessus.

Le pneumatique selon l'invention peut être destiné à équiper notamment les véhicules sans moteur tels que les bicyclettes, les véhicules à moteur de type tourisme, les SUV (Sport Utility Vehicles), les deux roues (notamment les motos), les avions, les véhicules industriels choisis parmi les camionnettes, les poids-lourds (c'est-à-dire le métro, les bus, les engin routiers (camions et remorques)), les véhicules hors la route, tels que les engins agricoles ou de génie civil, les autres véhicules de transports ou de manutention.

**III. Exemples de réalisation de l'invention et essais comparatifs**

Les exemples qui suivent permettent d'illustrer l'invention, cette dernière ne saurait cependant être limitée à ces seuls exemples.

III-1) Composition élastomérique utilisée

La composition élastomérique de la Table 1 est utilisée pour les compositions témoin, comparatif et selon l'invention et sa formulation est donnée en pce (parties en poids pour 100 parties d'élastomère).

[Table 1]

| Composition | Composition 1 |
|---|---|
| Copolymère A1 (1) | 100 |
| Charge renforçante (2) | 43 |
| Agent de couplage (3) | 0.86 |

(suite)

| Composition | Composition 1 |
|---|---|
| Système de réticulation (4) | 5 |
| (1) Copolymère A1 : Copolymère éthylène/acétate de vinyle (EVA) commercialisé par Arkema sous la référence Evatane 42-60. Le copolymère A1 a un pourcentage molaire de monomère d'éthylène (E) égal à 81% et un pourcentage molaire de monomère d'acétate de vinyle (VA) égal à 19%. Il présente un MFI à 190°C allant de 65 à 85 g/10 mn (MFI =Melt Flow Index et mesuré selon la norme ASTM ISO 1133 de 2011) et une température de fusion Tf, mesurée selon la norme ISO 11357 de 2013 égale à 48°C ;<br>(2) Charge renforçante : Silice « 1165 » commercialisée par Solvay et dont la surface spécifique BET est de 160 $m^2$/g ;<br>(3) Agent de couplage méthacryloxypropyltriéthoxysilane commercialisé par Gelest (CAS 21142-29-0)<br>(4) Système de réticulation : Dicumyle peroxyde (Dicup) commercialisé par Arkema (CAS 80-43-3) | |

III-2) Réalisation des compositions

III-2-1) Exemple témoin

On introduit dans un mélangeur interne de type Banbury, rempli à 70% et dont la température initiale de cuve est de 50°C, le copolymère A1, une première partie de la silice, l'agent de couplage puis, après une à deux minutes de malaxage, la seconde partie de la silice. On conduit alors un travail thermomécanique (phase non-productive) en une étape (vitesse de rotation des rotors de 60 rpm et durée totale du malaxage égale à 4 minutes), jusqu'à atteindre une température maximale de « tombée » d'environ 165°C à pression atmosphérique.

On récupère le mélange ainsi obtenu, on le refroidit puis on ajoute le système de réticulation sur un mélangeur externe (homo-finisseur) à 70°C, en mélangeant le tout (phase productive).

Le débit de composition fabriquée est de 3kg/h. Les pertes matières lors du procédé sont de l'ordre de 30%.

Les compositions ainsi obtenues sont ensuite calandrées sous la forme de plaques (épaisseur de 2 à 3 mm) pour la mesure de leurs propriétés physiques et mécaniques après une cuisson de 20 min à 170°C.

III-2-2) Exemple comparatif et exemple selon l'invention :

La composition selon la Table 1 constituée du copolymère A1, de la charge renforçante comprenant une charge inorganique renforçante et de l'agent de couplage (sans le système de réticulation) a été mise en œuvre sur une extrudeuse bivis corotative de marque Clextral (Evolum HT 32) possédant un diamètre de vis de 32 mm et une longueur des vis de 1408 mm. Le profil de vis possède deux zones de cisaillement (Y1 et Y2), 1 zone de mélangeage (Z1) et trois zones de décompression (X1, X2 et X3) au niveau desquelles il est possible de venir ajouter des charges ou additifs (zones d'introduction). La longueur de chaque zone est indiquée dans la Table 2.

[Table 2]

| Zones de l'extrudeuse (d'amont en aval de l'extrudeuse) | Eléments constitutifs de la bi-vis (d'amont en aval) | Longueur (mm) | Fonction (dans l'exemple comparatif et l'exemple selon l'invention) |
|---|---|---|---|
| X1 | Filets à simple filet | 240 | Introduction du copolymère A1 |
| Y1 | Trois malaxeurs inverses à 45° / un malaxeur inverse à 90° / un contre-filet à simple filet | 128 | Fusion du copolymère A1 |
| X2 | Filets à simplet filet | 144 | Introduction de la charge renforçante et de l'agent de couplage |
| Y2 | Trois malaxeurs inverses à 45° | 80 | Dispersion de la charge renforçante |
| X3 | Filets à simple filet | 248 | Refroidissement de la composition |

(suite)

| Zones de l'extrudeuse (d'amont en aval de l'extrudeuse) | Eléments constitutifs de la bi-vis (d'amont en aval) | Longueur (mm) | Fonction (dans l'exemple comparatif et l'exemple selon l'invention) |
|---|---|---|---|
| Z1 | Deux malaxeurs inverses à 45° / deux contre-filets à double filet | 32 | Dispersion de la charge et homogénéisation de la composition |
| X4 | Filets à simple filet | 536 | |

La température des parois de l'extrudeuse est contrôlée au moyen de capteurs de température.

Le copolymère A1 est introduit au niveau de la zone X1. Le copolymère A1 est amené à l'état fondu au niveau de la zone de cisaillement Y1.

La charge renforçante et l'agent de couplage sont introduits au niveau de la zone X2. La dispersion de la charge renforçante dans le copolymère A1 s'effectue principalement au niveau de la zone de cisaillement Y2.

Pour l'exemple comparatif et l'exemple selon l'invention, la composition obtenue après extrusion est récupérée, refroidit puis on ajoute le système de réticulation sur un mélangeur externe (homo-finisseur) à 70°C. L'incorporation du système de réticulation est donc similaire à celle mise en œuvre dans l'exemple témoin.

<u>Exemple comparatif - cas d'une composition extrudée avec une énergie mécanique spécifique (SME) de 882 J/g ( (hors invention)</u>

Cette composition a été obtenue avec les paramètres de l'extrudeuse indiqués dans la Table 3 et en apportant une énergie mécanique à la composition de 882 J/g :

[Table 3]

| Débit total extrudeuse (kg/heure) | Température parois extrudeuse (°C) | Vitesse rotation vis (rpm) | Energie mécanique spécifique reçue par la composition (J/g) | Température de la composition en sortie d'extrudeuse (°C) |
|---|---|---|---|---|
| 18.8 | 150°C | 125 rpm | 882 J/g | 138°C |

<u>Exemple selon l'invention - cas d'une composition extrudée avec une énergie mécanique spécifique (SME) de 2185 J/g ( selon l'invention)</u>

Cette composition a été obtenue avec les paramètres de l'extrudeuse indiqués dans la Table 4 et en apportant une énergie mécanique à la composition de 2185 J/g :

[Table 4]

| Débit total extrudeuse (kg/heure) | Température parois extrudeuse (°C) | Vitesse rotation vis (rpm) | Energie mécanique spécifique reçue par la composition (J/g) | Température de la composition en sortie d'extrudeuse (°C) |
|---|---|---|---|---|
| 9.4 | 80°C | 225 rpm | 2185 J/g | 81°C |

Le procédé d'extrusion étant un procédé continu, les pertes matières lors du procédé sont considérées comme proches de 0.

Les compositions de l'exemple comparatif et de l'exemple selon l'invention sont ensuite calandrées sous la forme de plaques (épaisseur de 2 à 3 mm) pour la mesure de leurs propriétés physiques et mécaniques après une cuisson de 20 min à 170°C. Pour la mesure de la note Z, les compositions de l'exemple comparatif et de l'exemple selon l'invention sont mises en forme de pavé droit de dimensions largeur 40 mm, longueur 100 mm et épaisseur 13 mm, qui est cuit pendant 20 min à 170°C.

<u>III-3) Résultats</u>

Les compositions selon l'exemple témoin, l'exemple comparatif et l'exemple selon l'invention ont fait l'objet des

caractérisations suivantes après cuisson :

a. Evaluation de la dispersion de la charge renforçante dans composition (mesure de la note Z) selon le protocole décrit précédemment
b. Evaluation des propriétés mécaniques (module sécant nominal à 50% d'allongement ou MA50, allongement à la rupture, contrainte à la rupture et énergie de rupture-déchirabilité) selon les protocoles décrits précédemment.

Les valeurs des propriétés mécaniques des compositions selon l'exemple comparatif et l'exemple selon l'invention sont normalisées par rapport à celles de l'exemple témoin (base 100) à l'exception de la valeur de la note Z.
Les résultats de caractérisation sont compilés dans la table 5 ci-dessous :

[Table 5]

| | **Qualité de la dispersion (Note Z, /100)** | **MA50 (Mpa)** | **Allongement rupture (%)** | **Contrainte rupture (Mpa)** | **Energie de rupture/ déchirabilité (MJ)** |
|---|---|---|---|---|---|
| **Exemple témoin** | 89 | (100) | (100) | (100) | (100) |
| **Exemple comparatif** | 91 | (122) | (89) | (92) | (79) |
| **Exemple selon l'invention** | 99 | (125) | (96) | (108) | (102) |

Les exemples montrent que le procédé d'extrusion bivis permettent d'obtenir une composition élastomérique présentant une dispersion de la charge renforçante de qualité au moins similaire à celle obtenue en utilisant un mélangeur interne traditionnel. Toutefois, même si la qualité de dispersion de la charge renforçante pour l'exemple comparatif est similaire à celle obtenue pour l'exemple témoin, la composition selon l'exemple comparatif a des propriétés de rupture/déchirabilité significativement inférieures.
Ainsi, le procédé d'extrusion doit être bien maîtrisé afin de générer des états de dispersion meilleurs que ceux obtenus par la voie classique utilisant deux mélangeurs et d'obtenir ainsi des propriétés mécaniques supérieures ou tout au moins similaires à la composition témoin. La composition extrudée avec l'énergie mécanique de 2185 J/g(exemple selon l'invention) conduit au meilleur état de macro-dispersion de la charge renforçante et aux meilleurs propriétés mécaniques.
Par ailleurs, le procédé selon l'invention permet de limiter les pertes de matière obtenues avec un mélangeur interne. Lorsque le procédé d'extrusion est effectué en continu, il ne s'accompagne pas de pertes. Les pertes lors du procédé par lots mettant en œuvre un mélangeur interne conduisent en outre à une augmentation importante de la durée de nettoyage de l'équipement et à une diminution des débits de production.

## Revendications

**1.** Procédé d'obtention d'une composition élastomérique à base d'au moins :

- un copolymère A à base d'au moins un monomère d'éthylène et d'au moins un monomère d'acétate de vinyle ; et
- une charge renforçante comprenant au moins une charge renforçante inorganique, le taux de ledit au moins un copolymère A dans ladite composition élastomérique étant supérieur au égal à 50 pce,

le procédé comprenant les étapes suivantes :

a) introduire dans une extrudeuse à double vis, de préférence co-rotative, au moins :

- ledit copolymère A à base d'au moins un monomère d'éthylène et d'au moins un monomère d'acétate de vinyle ;
- ladite charge renforçante comprenant au moins une charge renforçante inorganique ;
- à titre d'agent de couplage entre ledit copolymère A et ladite charge renforçante inorganique au moins un composé organosilane de formule (I) :

$$B\text{-}Z\text{-}Si(G^1)_{(3\text{-}d)}(G^2)_{(d)} \qquad (I)$$

dans laquelle :

- B représente un groupe fonctionnel interagissant avec le copolymère A, le groupe B étant choisi parmi les groupes vinyliques, les atomes d'halogène, les groupes $\alpha,\beta$ énones insaturées, les groupes acryloxy, les groupes méthacryloxy, les groupes acrylamido, les groupes méthacrylamido et les groupes amino ;
- Z représente un groupe espaceur formé d'une chaîne hydrocarbonée divalente comportant de 1 à 18 atomes de carbone et permettant de relier le groupe B à l'atome de silicium ;
- $G^1$ identiques ou différents, représentent chacun un groupe hydrocarboné monovalent choisi parmi les alkyles, linéaires ou ramifiés, ayant de 1 à 18 atomes de carbone, les cycloalkyles ou les aryles, substitués ou non substitués, ayant de 5 à 18 atomes de carbone, alkenyloxyles, substitués ou non substitués, ayant de 2 à 18 atomes de carbone, les groupes aryloxy ou aralkyloxy, substitués ou non substitués, ayant de 6 à 18 atomes de carbone ou un groupe monovalent se présentant sous la forme $R^1$-(-O-$(CJ_2)_a)_b$-O-dans laquelle J représente un hydrogène, un groupe phényle ou un groupe alkyle ayant de 1 à 4 atomes de carbone, b est un nombre entier appartenant à l'intervalle 1 à 18 et a est un nombre entier appartenant à l'intervalle 1 à 6, et $R_1$ étant choisi parmi les alkyles, linéaires ou ramifiés, substitués ou non substitués, ayant de 1 à 4 atomes de carbone ou les alcoxyles, linéaires ou ramifiés, substitués ou non substitués, ayant de 1 à 4 atomes de carbone ;
- $G^2$ identiques ou différents, représentent chacun un groupe monovalent choisi parmi le groupe hydroxyle (-OH), les alcoxyles, linéaires ou ramifiés, substitués ou non substitués, ayant de 1 à 18 atomes de carbone ;
- d est égal à 1, 2 ou 3 ; et

b) récupérer en sortie d'extrudeuse la composition extrudée, la dispersion de la charge renforçante dans la composition extrudée présentant une note Z, telle que définie dans la description, supérieure ou égale à 80, préférentiellement supérieure ou égale à 85 et de façon particulièrement préférée supérieure ou égale à 90 ;

et tel que :

- l'extrudeuse comprend plusieurs zones disposées axialement depuis une extrémité amont jusqu'à une extrémité aval de l'extrudeuse dont au moins :

  - une zone d'introduction (X) où peuvent être introduits les composants de ladite composition élastomérique ;
  - une zone de cisaillement (Y) permettant la fusion du copolymère A et la dispersion de la charge renforçante dans le copolymère A fondu ;
  - la température de paroi de l'extrudeuse est maintenue dans un domaine allant de 50°C à 100°C, préférentiellement de 55°C et 85°C, pendant tout le procédé d'extrusion ;
  - la vitesse de rotation de la double vis est comprise dans un domaine allant de 150 rpm à 275 rpm, préférentiellement de 200 rpm à 250 rpm pendant tout le procédé d'extrusion ;

- l'énergie mécanique spécifique transmise à la composition au cours du procédé est comprise dans un domaine allant de 1000 J/g à 14 400 J/g, plus préférentiellement de 1200 J/g à 7000 J/g, plus préférentiellement encore de 1500 J/g à 5000 J/g, ladite énergie mécanique spécifique étant calculée selon la formule (1) :

$$SME = A * ( \tau * N ) / Q \qquad (1)$$

dans laquelle :

- A est un paramètre caractéristique de l'extrudeuse utilisée pour le procédé d'extrusion calculé selon la formule (2) :

$$A = Pmoteur / (\tau max * Nmax) \qquad (2)$$

dans laquelle Pmoteur est la puissance du moteur, $\tau$max est le couple moteur maximum et Nmax est la vitesse maximum de rotation des vis ;

- $\tau$ est le couple moteur ;

- N est la vitesse de rotation des vis ;
- et Q est le débit d'alimentation en composition à extruder.

2. Procédé selon la revendication précédente **caractérisé en ce que** chacune des vis de la double vis comprend au niveau de la zone de cisaillement Y un ou plusieurs éléments choisis parmi un élément malaxeur inverse, un élément à pas inverse à filet simple ou un élément à pas inverse à double filet, et leurs combinaisons.

3. Procédé selon l'une quelconque des revendications précédentes **caractérisé en ce que** les zones de l'extrudeuse disposées axialement depuis une extrémité amont jusqu'à une extrémité aval de l'extrudeuse comprennent successivement :

   - une zone d'introduction (X1) du copolymère A ;
   - une zone de cisaillement (Y1) de sorte que le copolymère A y est amené dans un état fondu ;
   - une zone d'introduction (X2) de la charge renforçante et de l'agent de couplage ;
   - une zone de cisaillement (Y2) de sorte que la charge renforçante y est dispersée dans le copolymère A fondu.

4. Procédé selon l'une quelconque des revendications 1 à 2 **caractérisé en ce que** les zones de l'extrudeuse disposées axialement depuis une extrémité amont jusqu'à une extrémité aval de l'extrudeuse comprennent successivement :

   - une zone d'introduction (X1) du copolymère A, de la charge renforçante et de l'agent de couplage ;
   - une zone de cisaillement (Y1) de sorte que le copolymère A y est amené dans un état fondu ;
   - une zone de cisaillement (Y2) de sorte que la charge renforçante y est dispersée dans le copolymère A fondu.

5. Procédé selon l'une quelconque des revendications précédentes, comprenant en outre l'incorporation et l'homogénéisation d'au moins un système de réticulation aux peroxydes dans la composition comprenant le copolymère A, la charge renforçante et l'agent de couplage.

6. Procédé selon la revendication 5 comprenant en outre une filière de sortie de l'extrudeuse permettant d'obtenir une composition élastomérique directement assemblable sur le tambour de confection d'un pneumatique, notamment directement assemblable sur la carcasse d'un pneumatique.

7. Procédé selon l'une quelconque des revendications précédentes **caractérisé en ce que** le taux de charge renforçante dans la composition élastomérique est compris dans un domaine allant de 20 à 100 pce, plus préférentiellement de 30 à 80 pce.

8. Procédé selon l'une quelconque des revendications précédentes **caractérisé en ce que** la charge renforçante comprend majoritairement une charge inorganique renforçante, plus préférentiellement encore comprend majoritairement une silice, notamment de précipitation.

9. Procédé selon l'une quelconque des revendications précédentes **caractérisé en ce que** le taux molaire de monomère d'éthylène dans le copolymère A est supérieur ou égal à 51%, de préférence supérieur ou égal à 55%, de préférence va de 57% à 90%.

10. Procédé selon l'une quelconque des revendications précédentes **caractérisé en ce que** la composition comprend un mélange de copolymères A différents les uns des autres.

11. Procédé selon l'une quelconque des revendications précédentes **caractérisé en ce que** le taux du composé organosilane de formule (I) va de 0,2 à 12 pce.

12. Procédé selon l'une quelconque des revendications précédentes **caractérisé en ce que** le taux du composé organosilane de formule (I) va de 1% à 15% en poids par rapport au poids de la charge renforçante inorganique.

13. Article semi-fini pour pneumatique **caractérisé en ce qu'**il comprend au moins une composition élastomérique obtenue selon le procédé de l'une quelconque des revendications précédentes.

14. Pneumatique **caractérisé en ce qu'**il comprend au moins une composition élastomérique obtenue selon le procédé de l'une quelconque des revendications 1 à 12 ou au moins un article semi-fini pour pneumatique selon la revendication précédente.

## Patentansprüche

1. Verfahren zum Erhalt einer Elastomerzusammensetzung auf Basis von mindestens:

- einem Copolymer A auf Basis von mindestens einem Ethylen-Monomer und mindestens einem Vinylacetat-Monomer und
- einem verstärkenden Füllstoff, der mindestens einen anorganischen verstärkenden Füllstoff umfasst, wobei der Gehalt des mindestens einen Copolymers A in der Elastomerzusammensetzung größer oder gleich 50 phe ist, wobei das Verfahren die folgenden Schritte umfasst:

a) Eintragen von mindestens Folgendem in einen vorzugsweise gleichläufigen Doppelschneckenextruder:

- dem Copolymer A auf Basis von mindestens einem Ethylen-Monomer und mindestens einem Vinylacetat-Monomer;
- dem verstärkenden Füllstoff, der mindestens einen anorganischen verstärkenden Füllstoff umfasst;
- mindestens einer Organosilanverbindung der Formel (I) als Mittel zum Kuppeln des Copolymers A und des anorganischen verstärkenden Füllstoffs:

$$B\text{-}Z\text{-}Si(G^1)_{(3\text{-}d)}(G^2)_{(d)} \qquad (I)$$

wobei:

• B für eine mit dem Copolymer A wechselwirkende funktionelle Gruppe steht, wobei die Gruppe B aus Vinylgruppen, Halogenatomen, ungesättigten $\alpha,\beta$-Enongruppen, Acryloxygruppen, Methacryloxygruppen, Acrylamidogruppen, Methacrylamidogruppen und Aminogruppen ausgewählt ist;
• Z für eine aus einer zweiwertigen Kohlenwasserstoffkette mit 1 bis 18 Kohlenstoffatomen gebildete Spacergruppe steht, die die Verknüpfung der Gruppe B mit dem Siliciumatom erlaubt;
• die Gruppen $G^1$ gleich oder verschieden sind und jeweils für eine einwertige Kohlenwasserstoffgruppe stehen, die aus linearen oder verzweigten Alkylgruppen mit 1 bis 18 Kohlenstoffatomen, substituierten oder unsubstituierten Cycloalkyl- oder Arylgruppen mit 5 bis 18 Kohlenstoffatomen, substituierten oder unsubstituierten Alkenyloxygruppen mit 2 bis 18 Kohlenstoffatomen, substituierten oder unsubstituierten Aryloxy- oder Aralkyloxygruppen mit 6 bis 18 Kohlenstoffatomen oder einer einwertigen Gruppe in der Form $R^1$-(-O- $(CJ_2)_a)_b$-O- ausgewählt ist, wobei J für Wasserstoff, eine Phenylgruppe oder eine Alkylgruppe mit 1 bis 4 Kohlenstoffatomen steht, b eine ganze Zahl im Bereich von 1 bis 18 ist und a eine ganze Zahl im Bereich von 1 bis 6 ist und wobei $R_1$ aus substituierten oder unsubstituierten, linearen oder verzweigten Alkylgruppen mit 1 bis 4 Kohlenstoffatomen oder substituierten oder unsubstituierten, linearen oder verzweigten Alkoxygruppen mit 1 bis 4 Kohlenstoffatomen ausgewählt ist;
• die Gruppen $G^2$ gleich oder verschieden sind und jeweils für eine einwertige Gruppe stehen, die aus der Hydroxylgruppe (-OH) und substituierten oder unsubstituierten, linearen oder verzweigten Alkoxygruppen mit 1 bis 18 Kohlenstoffatomen ausgewählt ist;
• d gleich 1, 2 oder 3 ist; und

b) Gewinnen der extrudierten Zusammensetzung am Ausgang des Extruders, wobei die Dispersion des verstärkenden Füllstoffs in der extrudierten Zusammensetzung einen wie in der Beschreibung definierten Z-Wert aufweist, die größer oder gleich 80, vorzugsweise größer oder gleich 85 und besonders bevorzugt größer oder gleich 90 ist;

und derart, dass:

- der Extruder mehrere Zonen umfasst, die axial von einem stromaufwärts gelegenen Ende bis zu einem stromabwärts gelegenen Ende des Extruders angeordnet sind, darunter mindestens:

• eine Eintragszone (X), in der die Komponenten der Elastomerzusammensetzung eingetragen werden können;
• eine Scherzone (Y), die das Schmelzen des Copolymers A und das Dispergieren des verstärkenden Füllstoffs in dem geschmolzenen Copolymer A ermöglicht;

- die Wandtemperatur des Extruders während des gesamten Extrusionsverfahrens in einem Bereich von 50 °C bis 100 °C, vorzugsweise von 55 °C bis 85 °C, gehalten wird;
- die Drehzahl der Doppelschnecke während des gesamten Extrusionsverfahrens in einem Bereich von 150 UpM bis 275 UpM, vorzugsweise von 200 UpM bis 250 UpM, liegt;
- die im Lauf des Verfahrens auf die Zusammensetzung übertragene spezifische mechanische Energie in einem Bereich von 1000 J/g bis 14.400 J/g, weiter bevorzugt von 1200 J/g bis 7000 J/g, noch weiter bevorzugt von 1500 J/g bis 5000 J/g, liegt,

wobei die spezifische mechanische Energie gemäß der Formel (1) berechnet wird:

$$SME = A * (\tau * N) / Q \quad (1)$$

wobei:

- A ein charakteristischer Parameter des für das Extrusionsverfahren verwendeten Extruders ist, der gemäß der Formel (2) berechnet wird:

$$A = Pmotor / (\tau max * Nmax) \quad (2)$$

wobei Pmotor die Leistung des Motors ist, $\tau$max das maximale Motordrehmoment ist und Nmax die maximale Drehzahl der Schnecken ist;

- $\tau$ das Motordrehmoment ist;
- N die Drehzahl der Schnecken ist
- und Q die Zuführungsrate der zu extrudierenden Zusammensetzung ist.

**2.** Verfahren nach dem vorhergehenden Anspruch, **dadurch gekennzeichnet, dass** jede der Schnecken der Doppelschnecke in der Scherzone Y ein oder mehrere Elemente umfasst, die aus einem Umkehrmischer-Element, einem Element mit umgekehrter Steigung mit eingängigem Gewinde oder einem Element mit umgekehrter Steigung mit zweigängigem Gewinde und Kombinationen davon ausgewählt sind.

**3.** Verfahren nach einem der vorhergehenden Ansprüche, **dadurch gekennzeichnet, dass** die Zonen des Extruders, die axial von einem stromaufwärts gelegenen Ende bis zu einem stromabwärts gelegenen Ende des Extruders angeordnet sind, nacheinander Folgendes umfassen:

- eine Eintragszone (X1) für das Copolymer A;
- eine Scherzone (Y1) derart, dass das Copolymer A darin in einen geschmolzenen Zustand gebracht wird;
- eine Eintragszone (X2) für den verstärkenden Füllstoff und das Kupplungsmittel;
- eine Scherzone (Y2) derart, dass der verstärkende Füllstoff darin in dem geschmolzenen Copolymer A dispergiert wird.

**4.** Verfahren nach einem der Ansprüche 1 bis 2, **dadurch gekennzeichnet, dass** die Zonen des Extruders, die axial von einem stromaufwärts gelegenen Ende bis zu einem stromabwärts gelegenen Ende des Extruders angeordnet sind, nacheinander Folgendes umfassen:

- eine Eintragszone (X1) für das Copolymer A, den verstärkenden Füllstoff und das Kupplungsmittel;
- eine Scherzone (Y1) derart, dass das Copolymer A darin in einen geschmolzenen Zustand gebracht wird;
- eine Scherzone (Y2) derart, dass der verstärkende Füllstoff darin in dem geschmolzenen Copolymer A dispergiert wird.

**5.** Verfahren nach einem der vorhergehenden Ansprüche, außerdem umfassend das Einarbeiten und das Homogenisieren mindestens eines Peroxid-Vernetzungssystems in die Zusammensetzung, die das Copolymer A, den verstärkenden Füllstoff und das Kupplungsmittel umfasst.

**6.** Verfahren nach Anspruch 5, außerdem umfassend eine Austrittsdüse des Extruders, die es ermöglicht, eine Elastomerzusammensetzung zu erhalten, die direkt auf die Aufbautrommel eines Reifens und insbesondere direkt auf die Karkasse eines Reifens aufgebracht werden kann.

7. Verfahren nach einem der vorhergehenden Ansprüche, **dadurch gekennzeichnet, dass** der Gehalt an verstärkendem Füllstoff in der Elastomerzusammensetzung in einem Bereich von 20 bis 100 phe, weiter bevorzugt von 30 bis 80 phe, liegt.

8. Verfahren nach einem der vorhergehenden Ansprüche, **dadurch gekennzeichnet, dass** der verstärkende Füllstoff hauptsächlich einen verstärkenden anorganischen Füllstoff umfasst und noch weiter bevorzugt hauptsächlich eine Kieselsäure, insbesondere eine Fällungskieselsäure, umfasst.

9. Verfahren nach einem der vorhergehenden Ansprüche, **dadurch gekennzeichnet, dass** der molare Gehalt an Ethylen-Monomer in dem Copolymer A größer oder gleich 51 % ist, vorzugsweise größer oder gleich 55 % ist und vorzugsweise 57 % bis 90 % beträgt.

10. Verfahren nach einem der vorhergehenden Ansprüche, **dadurch gekennzeichnet, dass** die Zusammensetzung eine Mischung von voneinander verschiedenen Copolymeren A umfasst.

11. Verfahren nach einem der vorhergehenden Ansprüche, **dadurch gekennzeichnet, dass** der Gehalt der Organosilanverbindung der Formel (I) 0,2 bis 12 phe beträgt.

12. Verfahren nach einem der vorhergehenden Ansprüche, **dadurch gekennzeichnet, dass** der Gehalt der Organosilanverbindung der Formel (I) 1 bis 15 Gew.-%, bezogen auf das Gewicht des anorganischen verstärkenden Füllstoffs, beträgt.

13. Halbzeug für Reifen, **dadurch gekennzeichnet, dass** es mindestens eine gemäß dem Verfahren nach einem der vorhergehenden Ansprüche erhaltene Elastomerzusammensetzung umfasst.

14. Reifen, **dadurch gekennzeichnet, dass** er mindestens eine gemäß dem Verfahren nach einem der Ansprüche 1 bis 12 erhaltene Elastomerzusammensetzung oder mindestens ein Halbzeug für Reifen nach dem vorhergehenden Anspruch umfasst.

## Claims

1. Method for obtaining an elastomeric composition based on at least:

   - a copolymer A comprising at least one ethylene monomer and at least one vinyl acetate monomer; and
   - a reinforcing filler comprising at least one inorganic reinforcing filler,

   the content of said at least one copolymer A in said elastomeric composition being greater than or equal to 50 phr, the method comprising the following steps:

   a) introducing into a twin-screw extruder, preferably co-rotating, at least:

      - said copolymer A comprising at least one ethylene monomer and at least one vinyl acetate monomer;
      - said reinforcing filler comprising at least one inorganic reinforcing filler;
      - as a coupling agent between said copolymer A and said inorganic reinforcing filler, at least one organosilane compound of formula (I):

      $$B\text{-}Z\text{-}Si(G^1)_{(3-d)}(G^2)_{(d)} \qquad (I)$$

      wherein:

      • B represents a functional group interacting with copolymer A, te group B being selected from vinyl groups, halogen atoms, $\alpha,\beta$-unsaturated enone groups, acryloxy groups, methacryloxy groups, acrylamido groups, methacrylamido groups, and amino groups;
      • Z represents a spacer group formed by a divalent hydrocarbon chain containing 1 to 18 carbon atoms, linking group B to the silicon atom;
      • $G^1$, identical or different, each represent a monovalent hydrocarbon group selected from linear or branched alkyls having 1 to 18 carbon atoms, substituted or unsubstituted cycloalkyls or aryls having 5 to 18 carbon atoms, substituted or unsubstituted alkenyloxys having 2 to 18 carbon atoms,

substituted or unsubstituted aryloxy or aralkyloxy groups having 6 to 18 carbon atoms, or a monovalent group of the form $R^1$-(-O-$(CJ_2)_a)_b$-O- where J is hydrogen, phenyl, or an alkyl group with 1 to 4 carbon atoms, b is an integer from 1 to 18, a is an integer from 1 to 6, and $R^1$ is selected from substituted or unsubstituted, linear or branched alkyls having 1 to 4 carbon atoms or substituted or unsubstituted, linear or branched alkoxy groups having 1 to 4 carbon atoms ;
• $G^2$, identical or different, each represent a monovalent group selected from hydroxyl group (-OH), and linear or branched, substituted or unsubstituted alkoxy groups with 1 to 18 carbon atoms;
• d is equal to 1, 2, or 3; and

b) recovering the extruded composition at the extruder outlet, the dispersion of the reinforcing filler in the extruded composition having a Z-score, as measured in the description, greater than or equal to 80, preferably greater than or equal to 85, and most preferably greater than or equal to 90;

and wherein:

the extruder comprises several axially arranged zones from an upstream end to a downstream end, including at least:

• an introduction zone (X) where the components of said elastomeric composition can be introduced;
• a shearing zone (Y) allowing the melting of copolymer A and the dispersion of the reinforcing filler in the molten copolymer A;

- the wall temperature of the extruder is maintained in the range from 50°C to 100°C, preferably from 55°C to 85°C, throughout the extrusion process ;
- the twin-screw extruder rotation speed is ranging from 150 rpm to 275 rpm, preferably from 200 rpm to 250 rpm throughout the extrusion process ;
- the specific mechanical energy transmitted to the composition during the process is ranging from 1000 J/g to 14,400 J/g, more preferably from 1200 J/g to 7000 J/g, and even more preferably from 1500 J/g to 5000 J/g,

said specific mechanical energy being calculated according to formula (1):

$$SME = A * (\tau * N) / Q \quad (1)$$

wherein:

• A is a characteristic parameter of the extruder used in the extrusion process, calculated according to formula (2):

$$A = P_{motor} / (\tau_{max} * N_{max}) \quad (2)$$

wherein:

$P_{motor}$ is the motor power,
$\tau_{max}$ is the maximum motor torque, and
$N_{max}$ is the maximum screw rotation speed.

• $\tau$ is motor torque
• N is the screw rotation speed; and
• Q is the feed rate of the composition to be extruded.

**2.** Method according to the preceding claim, **characterized in that** each screw of the twin-screw extruder comprises, in the shearing zone Y, one or more elements selected from a reverse kneading block, a single-thread reverse pitch element, a double-thread reverse pitch element, and combinations thereof.

**3.** Method according to any one of the preceding claims, **characterized in that** the zones of the extruder arranged axially from an upstream end to a downstream end of the extruder successively comprise:

- an introduction zone (X1) for copolymer A;
- a shearing zone (Y1) where copolymer A is brought to a molten state;
- an introduction zone (X2) for the reinforcing filler and the coupling agent;
- a shearing zone (Y2) where the reinforcing filler is dispersed in the molten copolymer A.

**4.** Method according to any one of claims 1 to 2, **characterized in that** the zones of the extruder arranged axially from an upstream end to a downstream end of the extruder successively comprise:

- an introduction zone (X1) for copolymer A, the reinforcing filler, and the coupling agent;
- a shearing zone (Y1) where copolymer A is brought to a molten state;
- a shearing zone (Y2) where the reinforcing filler is dispersed in the molten copolymer A.

**5.** Method according to any one of the preceding claims, further comprising the incorporation and homogenization of at least one peroxide-based crosslinking system into the composition comprising copolymer A, the reinforcing filler, and the coupling agent.

**6.** Method according to claim 5, further comprising an extruder outlet die enabling the production of an elastomeric composition directly assemblable onto the building drum of a tire, in particular directly assemblable onto the carcass of a tire.

**7.** Method according to any one of the preceding claims, **characterized in that** the content of reinforcing filler in the elastomeric composition is in the range from 20 to 100 phr, more preferably from 30 to 80 phr.

**8.** Method according to any one of the preceding claims, **characterized in that** the reinforcing filler predominantly comprises an inorganic reinforcing filler, even more preferably predominantly comprises silica, in particular precipitated silica.

**9.** Method according to any one of the preceding claims, **characterized in that** the molar ratio of ethylene monomer in copolymer A is greater than or equal to 51%, preferably greater than or equal to 55%, and preferably ranges from 57% to 90%.

**10.** Method according to any one of the preceding claims, **characterized in that** the composition comprises a mixture of different copolymers A.

**11.** Method according to any one of the preceding claims, **characterized in that** the content of the organosilane compound of formula (I) ranges from 0.2 to 12 phr.

**12.** Method according to any one of the preceding claims, **characterized in that** the content of the organosilane compound of formula (I) ranges from 1% to 15% by weight relative to the weight of the inorganic reinforcing filler.

**13.** Semi-finished article for a tire, **characterized in that** it comprises at least one elastomeric composition obtained according to the method of any one of the preceding claims.

**14.** Tire **characterized in that** it comprises at least one elastomeric composition obtained according to the method of any one of claims 1 to 12 or at least one semi-finished article for a tire according to the preceding claim.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2018115758 A
- EP 0341499 A2
- EP 0307755 A2
- FR 2740778 A1
- US 6013718 A
- WO 2008141702 A1
- FR 2765882 A1
- US 5977238 A
- WO 0192402 A1
- US 6815473 B
- WO 2004096865 A2
- US 20060089445 A
- EP 1127909 A1
- US 6503973 B
- WO 2009000750 A1
- WO 2009000752 A1
- WO 2010072761 A1
- WO 03016387 A1
- WO 9928376 A2
- WO 0073372 A1
- WO 02053634 A1
- WO 2004003067 A1
- WO 2004056915 A2
- US 6610261 B1
- US 6747087 B2
- WO 9637547 A2
- WO 9928380 A1
- WO 2011067504 A


### Littérature non-brevet citée dans la description


- **THAM DO Q**. Preparation and Properties of Ethylene Vinyl Acetate Copolymer/Silica Nanocomposites in Presence of EV A-g-Acrylic Acid. *J. Nanosci. Nanotechnol*, 2015, vol. 15, 2777-2784
- *Composites Science and Technology*, 2013, vol. 75, 7-14
- **BRUNAUER-EMMETT-TELLER**. *Journal of the American Chemical Society*, February 1938, vol. 60, 309
- *CHEMICAL ABSTRACTS*, 21142-29-0
- *CHEMICAL ABSTRACTS*, 80-43-3